# EUROPEAN PATENT APPLICATION

(11) **EP 4 517 423 A1**
(43) Date of publication of application: **05.03.2025**
(21) Application number: 23878485.4
(22) Date of filing: 19.01.2023
(51) Int. Cl.: G03B 21/16, G03B 21/20, H04N 5/74

(54) **PROJECTION APPARATUS**

(30) Priority: 18.10.2022 CN 202222741835 U; 27.10.2022 CN 202222854112 U; 08.11.2022 CN 202222968071 U; 10.11.2022 CN 202211410052; 10.11.2022 CN 202222994221 U
(71) Applicant: Boe Technology Group Co., Ltd., Beijing 100015 (CN); Beijing BOE Display Technology Co., Ltd., Beijing 100176 (CN)
(72) Inventor: LI, Xi, Beijing 100176 (CN); ZHANG, Wei, Beijing 100176 (CN); WANG, Guangquan, Beijing 100176 (CN); WANG, Yujie, Beijing 100176 (CN); WANG, Jingang, Beijing 100176 (CN); CUI, Fengyan, Beijing 100176 (CN); HAN, Tianyang, Beijing 100176 (CN); LIU, Xiaolong, Beijing 100176 (CN)
(74) Representative: Cohausz & Florack
(86) International application number: PCT/CN2023/073120
(87) International publication number: WO 2024/082479

(57) **Abstract**

The present disclosure provides a projection device, including: a housing (1), a light source component (2), and a projection lens (3); an accommodating space (SP) is formed inside the projection device; the projection device further includes a second mirror (MR2), a second fan (7) and a lens component (LNSG) in the accommodating space (SP); the second mirror (MR2) is arranged on a light outgoing side of the light source component (2) and is configured to reflect light emitted from the light source component (2) into the lens component (LNSG), and the lens component (LNSG) is configured to collimate light; the accommodating space (SP) includes an air flowing space including a first subspace (SP1) and a second subspace (SP2); the first subspace (SP1) is defined by the light source component (2), the second mirror (MR2), the lens component (LNSG) and a part of the housing (1), and the second subspace (SP2) is around the first subspace (SP1); the second fan (7) is configured to promote internal air within the air flowing space to circulate, so that the internal air circularly flow between the first subspace (SP1) and the second subspace (SP2).

## Description

### TECHNICAL FIELD

The present disclosure relates to the field of display technology, and in particular to a projection device.

### BACKGROUND

A projection device is a device which may project images or videos on a screen and may be connected to devices such as a computer, a game machine, a television and the like through different interfaces, so as to play corresponding video signals. The projection device is widely used in homes, offices, schools and entertainment venues.

Currently, the projection device in the market mainly includes a CRT (Cathode Ray Tube) projection device, an LCD (Liquid Crystal Display) projection device, or a DLP (Digital Light Processing) projection device. The LCD projection device mainly includes a single LCD projection device, a triple-LCD projection device, or the like. The single LCD projection device has a simple structure and a low cost, and is suitable for being popularized to middle and low consumption groups, so that the single LCD projection device has a considerable development space.

### SUMMARY

The present disclosure provides a projection device.

The present disclosure provides a projection device, including a housing, a light source component, a projection lens, a first heat sink and a first fan, wherein the light source component includes a light emitting element, wherein the housing includes a front surface and a rear surface opposite to each other, the front surface includes a first opening and a second opening; the housing further includes a third opening, at least a part of the third opening is in the rear surface; the light emitting element is at the first opening; the projection lens is at the second opening; and the first heat sink is at the third opening of the housing; wherein the light emitting element, the projection lens, the first heat sink, and the housing together form an accommodating space; and the first fan is on a side of the light emitting component away from the accommodating space; and the light source component further includes a light emitting element base, and the light emitting element is on the light emitting element base; the first fan includes a first air inlet close to the light emitting element base; and the first air inlet and the light emitting element base include a first gap therebetween.

In some embodiments, the first air inlet includes a first region covered by an orthographic projection of the light emitting element base on the first air inlet and a second region on a side of the first region away from the projection lens.

In some embodiments, the first air inlet further includes a third region on a side of the first region away from the second region, wherein a width of the third region is less than a width of the second region.

In some embodiments, the projection device includes a base plate; the base plate is opposite to the housing; the housing and the base plate include a first outer air duct therebetween, and/or the base plate is opposite to a portion of the first heat sink, and the portion and the base plate include a first outer air duct therebetween; and the first outer air duct is configured such that air passes through the first outer air duct and then enters the first fan when the projection device is operating.

In some embodiments, the first outer air duct is opposite to the second region.

In some embodiments, the projection device includes a circuit board; the circuit board is opposite to the housing; the housing and the circuit board include a second outer air duct therebetween; and/or the circuit board is opposite to a portion of the first heat sink, and the portion and the circuit board include a second outer air duct therebetween; and the second outer air duct is configured such that air passes through the second outer air duct and then enters the first fan when the projection device is operating; the second outer air duct is opposite to the second region.

In some embodiments, the first heat sink has an arcuate shape as a whole.

In some embodiments, the first heat sink includes a wrapping portion and a plurality of first heat dissipation fins on a side of the wrapping portion away from the accommodating space; the wrapping portion covers the third opening, the plurality of first heat dissipation fins include a plurality of first heat dissipation portions, respectively, and the first heat sink is configured to allow air to enter the first fan from the first air inlet after passing through the plurality of first heat dissipation portions.

In some embodiments, the projection device includes at least one of a circuit board and a base plate; the projection device includes the circuit board, at least a portion of the first heat dissipation portion is between the wrapping portion and the circuit board, and/or, the projection device includes the base plate, at least a portion of the first heat dissipation portion is between the wrapping portion and the base plate.

In some embodiments, the circuit board includes a second heat dissipation portion on a side of the circuit board close to the housing and/or on a side of the circuit board close to the first heat dissipation portion.

In some embodiments, the wrapping portion includes a first wrapping sub-portion on a side on which the rear surface of the housing is located, and a second wrapping sub-portion on a different side from the side on which the rear surface of the housing is located; the second wrapping sub-portion and the first wrapping sub-portion are sequentially arranged; the first heat dissipation portion is a heat dissipation fin on a side of the second wrapping sub-portion away from the accommodating space.

In some embodiments, in an operating state of the projection device, the projection lens is higher than the light source component; the housing further includes a bottom surface and a top surface, the bottom surface is lower than the top surface, the front surface and the rear surface are connected to the top and bottom surfaces, respectively.

In some embodiments, in an operating state of the projection device, the projection device is configured to form an air duct between the bottom surface and a placement surface of the projection device; the air entering the first air inlet includes air passing through the air duct, and the air entering the air duct carries the heat radiated from the first heat sink.

In some embodiments, the projection device further includes: a first polarizing element on a light outgoing side of the light source component, and configured to convert the light emitted from the light source component into first polarized light having a first polarization direction; a display panel on a side of the first polarizing element away from the light source component; a first lens on a side of the display panel away from the light source component or between the display panel and the first polarizing element; a first mirror configured to reflect light emitted from the display panel into the projection lens; and a second polarizing element on the side of the display panel away from the first polarizing element and configured to emit out polarized light in one of the first polarization direction and a second polarization direction through the projection lens, wherein the first polarization direction is perpendicular to the second polarization direction; wherein the first mirror and the second polarizing element are the same element or different elements; the display panel is a liquid crystal display panel.

In some embodiments, the projection device further includes a light-transparent part; the first lens is on a side of the display panel away from the light source component, the light-transparent part is between the light source component and the display panel, and the light-transparent part and the display panel include a second gap therebetween; or the first lens is between the display panel and the first polarizing element, the light-transparent part is between the light source component and the first lens, and the light-transparent part and the first lens include a second gap therebetween; the first polarizing element is attached to the light-transparent part.

In some embodiments, the projection device includes a second fan in the accommodating space and configured to promote internal air in the accommodating space to circulate, wherein the internal air exchanges heat through the first heat sink; and the second fan includes a second air inlet and a second air outlet, the second air outlet is configured to discharge the internal air, and the second air inlet is configured to suck the internal air, so that the internal air circularly flows in the accommodating space; a flow path of the internal air includes the second gap.

In some embodiments, the first lens and the display panel have a third gap therebetween; the flow path of the internal air includes the third gap, and the third gap and the second gap are disposed side by side; and a flow direction of the internal air in the second gap and a flow direction of the internal air in the third gap are the same or opposite to each other.

In some embodiments, the internal air sequentially flows through the second air outlet, a second air duct, a third air duct, a first air duct, and the second air inlet in an internal circulation; and the second air duct includes the second gap; the third air duct includes the third gap; at least a part of the first heat sink forms a side wall of the first air duct.

In some embodiments, the first heat sink includes second heat dissipation fins extending into the first air duct.

In some embodiments, the projection device further includes a second mirror and a second lens; wherein the second mirror is configured to reflect the light emitted from the light emitting element into the second lens; the second lens is configured to collimate light; and the second fan is on a side of the second mirror away from the light source component; and the second fan and the first heat sink include a fourth gap therebetween, and the first air duct includes the fourth gap.

In some embodiments, the first fan is an axial flow fan.

In some embodiments, the projection device further includes a fixing frame, wherein the display panel and the first lens are respectively inlaid on two opposite sides of the fixing frame; the first lens and the display panel includes a third gap therebetween; and the fixing frame includes two through sides opposite to each other, and each through side includes hollowed-out portions.

In some embodiments, the fixing frame includes two positioning sides opposite to each other; and two ends of each positioning side are connected to the two through sides, respectively; each positioning side includes a positioning portion for cooperating with the housing for positioning the fixing frame.

In some embodiments, each positioning portion includes a rib, and the rib extends in the same direction as the display panel; the fixing frame further includes a U-shaped clip; the display panel, the fixing frame, and the first lens are all between both ends of each U-shaped clip, and each U-shaped clip clamps at least one side of the fixing frame; and the projection device further includes a matching rib at a position where the U-shaped clip clamps the side of the fixing frame; the matching rib and the ribs of the positioning portion are disposed continuously.

In some embodiments, an inner surface of the housing includes a groove, and the ribs cooperate with the groove to achieve the positioning of the fixing frame; and one of the two through sides faces the first heat sink.

In some embodiments, the projection device includes a focusing component for adjusting a focus of the projection lens; wherein the focusing component includes a sensing component and a driving component; the sensing component is configured to measure a projection distance between the projection lens and a projected image; the driving component is configured to drive the projection lens to adjust the focus according to the measured projection distance; the driving component includes a driving motor, an actuator, and a focus adjuster on the projection lens; the driving motor drives the actuator to move, and the actuator is coupled to the focus adjuster.

In some embodiments, the actuator includes a first gear, and the focus adjuster includes a transmission gear at an outer circumference of the projection lens, and the first gear and the transmission gear are engaged with each other and coupled with each other; the focusing component includes a limiting component for controlling a focusing range for the projection lens; the limiting component includes an optical coupler and a baffle plate, and a relative position of the baffle plate and the focus adjuster is fixed; and a relative position of the optical coupler and the housing is fixed; the optical coupler is configured to determine whether the light is shielded or not by the baffle plate and to send a signal for providing a command to the driving motor.

In some embodiments, the focusing component includes a focusing ring, and the baffle plate and the transmission gear are secured around the focusing ring.

In some embodiments, the projection device further includes a second fan in the accommodating space and configured to promote internal air in the accommodating space to circulate, wherein the internal air exchanges heat through the first heat sink; the second fan includes a second air inlet and a second air outlet, the second air outlet is configured to discharge the internal air, and the second air inlet is configured to suck the internal air, so that the internal air circularly flows in the accommodating space; and wherein the second fan is a centrifugal fan; the second air inlet is opposite to the first heat sink.

### BRIEF DESCRIPTION OF DRAWINGS

The accompanying drawings, which are provided for further understanding of the present disclosure and constitute a part of this specification, are for explaining the present disclosure together with the detail description of embodiments, but are not intended to limit the present disclosure. In the drawings:
FIGS. 1A, 1D and 1E show schematic perspective views of a projection device in a cut-away manner according to some exemplary embodiments of the present disclosure, which are intended to illustrate an internal structure of the projection device.
FIGS. 1B and 1C are schematic perspective views of a first heat sink of a projection device according to some exemplary embodiments of the present disclosure.
FIG. 2 is a schematic perspective view of a projection device according to further exemplary embodiments of the present disclosure, which is intended to illustrate an external structure of the projection device.
FIG. 3 schematically illustrates a circulation path of internal air inside an accommodating space and a circulation path of external air outside the accommodating space of a projection device according to some exemplary embodiments of the present disclosure.
FIG. 4 schematically illustrates a focus adjuster and a baffle plate of a projection device according to some exemplary embodiments of the present disclosure.
FIG. 5 is an enlarged schematic diagram of a first air inlet of a first fan of a projection device according to some exemplary embodiments of the present disclosure, which highlights various functional regions of the first air inlet.
FIGS. 6A and 6B schematically illustrate a positional relationship among a display panel, a first polarizing element, a second polarizing element, a light-transparent part, a first lens, and a second lens along a light traveling direction of a projection device according to some exemplary embodiments of the present disclosure.
FIG. 7 schematically illustrates an optical path of a projection device according to some exemplary embodiments of the present disclosure in a simplified manner.
FIG. 8 schematically shows that a display panel and a first lens or a second lens are fixed to a fixing frame by means of a snap in an exploded view.
FIG. 9 schematically illustrates a case in which a display panel is matched with a groove in an inner surface of a housing of a projection device according to some exemplary embodiments of the present disclosure in a simplified manner.
FIG. 10 schematically illustrates a circulation path of internal air inside an accommodating space and a circulation path of external air outside the accommodating space of a projection device according to further exemplary embodiments of the present disclosure.
FIG. 11 is a perspective view of a second fan in the projection device of FIG. 10.
FIG. 12 is a perspective view of a second fan in the projection device of FIG. 10 from another perspective.
FIG. 13 is a reference schematic diagram of a partial position in the projection device shown in FIG. 10.
FIG. 14 is a schematic diagram of a position relationship between a second mirror and a ventilation portion according to some exemplary embodiments of the present disclosure.
FIG. 15 is a schematic diagram of optical elements in a projection device according to some exemplary embodiments of the present disclosure.
FIG. 16 is a schematic diagram of an optical path when a display surface of a display panel is parallel to a plane where a second lens is located.
FIG. 17 is a schematic diagram of an object-space telecentric optical path implemented in a projection device according to some exemplary embodiments of the present disclosure.
FIG. 18 is a schematic diagram of a display panel, a second lens, a first mirror, and a projection lens in the projection device shown in FIG. 15.
FIG. 19 is a schematic diagram of a principle of an off axis projection by rotating an angle.
FIG. 20A is a schematic diagram of a relationship between a projection device and a ground plane according to some exemplary embodiments of the present disclosure.
FIG. 20B is a schematic diagram of a relationship between a projection device and a ground plane according to other exemplary embodiments of the present disclosure.
FIG. 21A is a schematic diagram of a partial optical path of a projection device according to some exemplary embodiments of the present disclosure.
FIG. 21B is a front view of a light emitting element and its base of a projection device according to some exemplary embodiments of the present disclosure.
FIG. 22A is a three-view diagram of a condenser lens of a projection device according to some exemplary embodiments of the present disclosure.
FIG. 22B is another three-view diagram of a condenser lens of a projection device according to some exemplary embodiments of the present disclosure.
FIG. 23 is another contour view of a lens chassis of a projection device according to some exemplary embodiments of the present disclosure.
FIG. 24A is a simulation diagram of an imaging optical path of a projection device according to some exemplary embodiments of the present disclosure.
FIG. 24B is a simulation diagram of an illuminance in a display region of a display panel of a projection device according to some exemplary embodiments of the present disclosure.
FIG. 25 is a schematic diagram of a second mirror in a projection device according to some exemplary embodiments of the present disclosure.
FIG. 26 is schematic diagram of an optical path of the second mirror shown in FIG. 25.
FIG. 27 is a schematic diagram of a second mirror in a projection device according to further exemplary embodiments of the present disclosure.
FIG. 28 is schematic diagram of an optical path of the second mirror shown in FIG. 27.
FIG. 29 is a schematic diagram of a second mirror in a projection device according to still further exemplary embodiments of the present disclosure.
FIG. 30 is schematic diagram of an optical path of the second mirror shown in FIG. 28.
FIG. 31 is a schematic diagram of a first mirror in a projection device according to some exemplary embodiments of the present disclosure.

### DETAIL DESCRIPTION OF EMBODIMENTS

The present disclosure is described in further detail below with reference to the drawings and embodiments. It is understood that the specific embodiments described herein are merely illustrative of the present disclosure and do not limit the scope of the present disclosure. It should be further noted that only a portion relevant to the present disclosure is shown in the drawings for the convenience of description.

It should be noted that in the present disclosure, the embodiments and the features of the embodiments may be combined with each other without conflict. The present disclosure will be described in detail below with reference to the drawings in conjunction with the embodiments.

It should be noted that orientation wordings in the present disclosure, "upper, lower, front, rear (back), horizontal and vertical", are relative concepts and not absolute concepts unless otherwise stated. When the absolute position of an object being described is changed, the relative positional relationships may also be changed accordingly.

It should be noted that a numerical range expressed in the form of [A, B] in the present disclosure indicates that the numerical range is from an A value to a B value, and includes both the A value and the B value. A numerical range expressed in the form of (A, B) in the present disclosure indicates that the numerical range is from the A value to the B value, and does not include the A value and the B value. A numerical range expressed in the form of [A, B) in the present disclosure indicates that the numerical range is from the A value to the B value, and includes the A value and does not include the B value. A numerical range expressed in the form of (A, B] in the present disclosure indicates that the numerical range is from the A value to the B value, and includes the B value and does not include the A value. In addition, a numerical range expressed in the form of "A-B" or "A~B" indicates the numerical range is from the A value to the B value, and includes both the A value and the B value.

Unless otherwise defined, a "rectangle" in the present disclosure includes a common rectangle, and a rounded rectangle. A length of a long side (i.e., a long side) and a length of a short side (i.e., a wide side) of the rounded rectangle are a length of a long side and a length of a short side of a common rectangle obtained by converting the rounded rectangle (corresponding to the rounded rectangle), respectively.

Unless otherwise defined, upper and lower bases of a trapezoid in the present disclosure are defined in a length relationship therebetween. A length of the upper base is less than that of the lower base in the trapezoid in the present disclosure.

For optical elements in the present disclosure, when describing a positional relationship among them, an element A is located on a side of an element B close to an element C, which may be understood in one of the following ways depending on an actual configuration of an optical path. In the first way, in the optical path, the main light passes through the element A and then passes through the element B during the main light travels from the element C to the element B. In the second way, in the optical path, the main light passes through the element A and then passes through the element C during the main light travels from the element B to the element C.

For the optical elements in the present disclosure, when describing a positional relationship among them, the element A is located on a side of the element B away from the element C, which may be understood in one of the following ways depending on an actual configuration of an optical path. In the first way, in the optical path, the main light passes through the element B and then passes through the element A during the main light travels from the element C to the element A. In the second way, in the optical path, the main light passes through the element B and then passes through the element C during the main light travels from the element A to the element C.

For convenience and simplicity of description, in the present disclosure, a position where a projection device generally operates is used as a basis reference, that is, a side of the projection device close to (facing) a projection image (e.g., a projection screen) is referred to as a front side or the front; a rear side or a back side refers to a side of the projection device away from the projection image, and left and right sides are lateral directions perpendicular to a front-rear direction. Upper and lower sides are directions perpendicular to the front-rear direction and a left-right direction.

Currently, the projection device in the market mainly includes a CRT (Cathode Ray Tube) projection device, an LCD (Liquid Crystal Display) projection device, and a DLP (Digital Light Processing) projection device. The LCD projection device mainly includes a single LCD projection device, a triple-LCD projection device, or the like. The single LCD projection device has a simple structure and a low cost, and is suitable for being popularized to middle and low consumption groups, so that the single LCD projection device has a considerable development space.

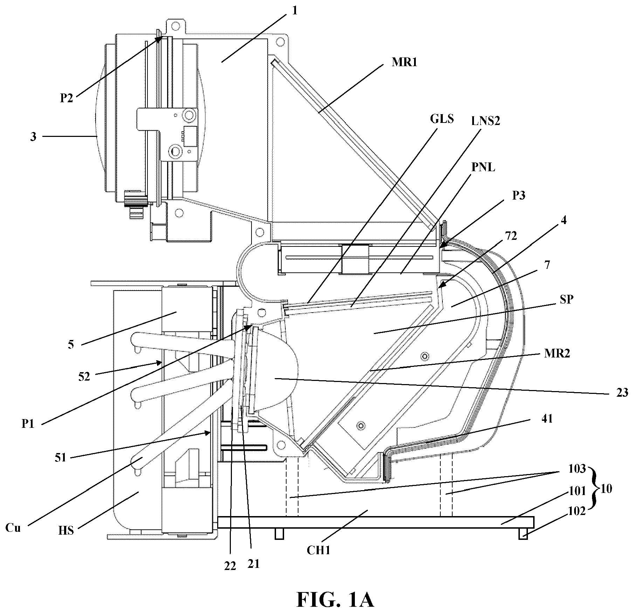

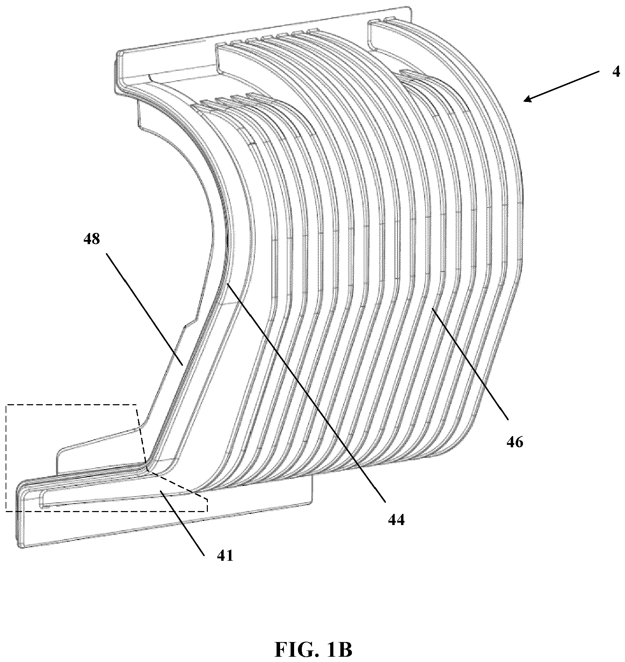

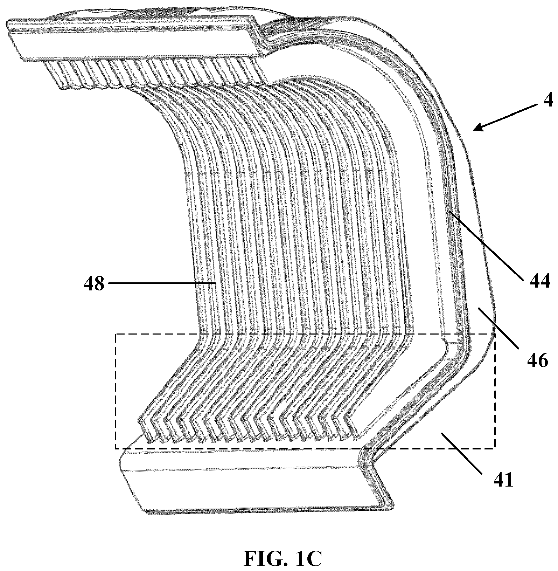

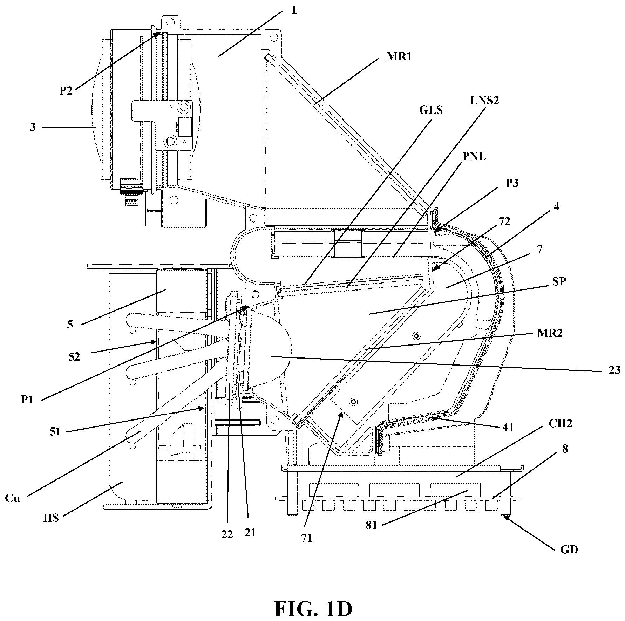

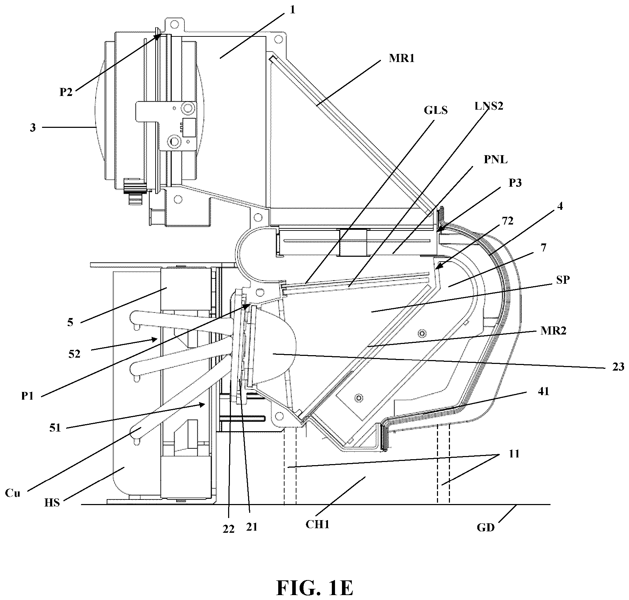

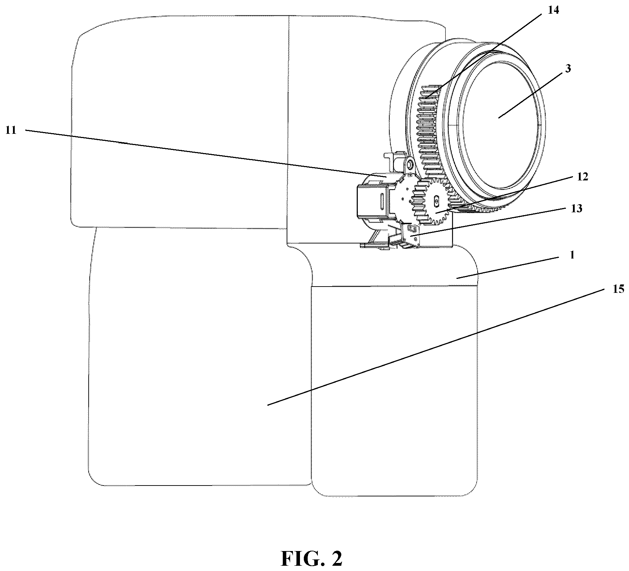

FIGS. 1A, 1D and 1E show schematic perspective views of a projection device in a cut-away manner according to some exemplary embodiments of the present disclosure, which are intended to illustrate an internal structure of the projection device. FIGS. 1B and 1C are schematic perspective views of a first heat sink of a projection device according to some exemplary embodiments of the present disclosure. FIG. 2 is a schematic perspective view of a projection device according to further exemplary embodiments of the present disclosure, which is intended to illustrate an external structure of the projection device. As shown in FIGS. 1A to 2, the projection device includes: a housing 1, a light source component 2, a projection lens 3 and a first heat sink 4.

The light source component 2 includes: a light emitting element 21 and a condenser lens 23 positioned on a light outgoing side of the light emitting element 21. The condenser lens 23 is configured to converge or shape the light emitted from the light emitting element 21. The condenser lens 23 may be a plano-convex lens. In some embodiments, the light source component 2 further includes a light emitting element base 22 on which the light emitting element 21 is positioned.

The housing 1 includes front and rear surfaces opposite to each other, the front surface includes a first opening P1 and a second opening P2. The housing 1 further includes a third opening P3, at least a part of the third opening P3 is located in the rear surface; the light emitting element 21 is located at the first opening P1; the projection lens 3 is located at the second opening P2; the first heat sink 4 is located at the third opening P3 of the housing 1. The light emitting element 21, the projection lens 3, the first heat sink 4, and the housing 1 together form an accommodating space SP.

In the projection device of the present disclosure, since the first heat sink 4 having a large heat dissipation area is provided at the third opening P3 of the housing 1, the heat dissipation efficiency of the heat inside the projection device is significantly improved. On the other hand, the first heat sink 4 and the housing 1 together form the accommodating space SP, and there is no hollow exhaust hole having a large area in the housing 1, so there is no friction between air and the housing 1 in the exhaust, thereby significantly reducing the operating noise of the projection device.

Preferably, the accommodating space SP is a closed accommodating space, so that dust can be prevented from entering into the housing, and the optical components can be kept clean.

In some embodiments, as shown in FIGS. 1A, 1D and 1E, the projection device may further include a first fan 5 located on a side of the light emitting component 2 away from the accommodating space SP. In some embodiments, the first fan 5 is an axial flow fan, and a pumping direction of the first fan 5 is parallel to an axial direction of the first fan 5. The first fan 5 includes a first air inlet 51 provided closely to the light emitting element base 22 and a first air outlet 52 opposite to the first air inlet 51.

The air carrying the heat conducted by the first heat sink 4 can be suctioned through the suction effect of the first fan 5, so that the heat from the first heat sink 4 is dissipated, thereby improving the heat dissipation efficiency. Furthermore, the first air inlet 51 is disposed opposite to the light emitting element base 22, which can dissipate the heat from the light emitting element. Preferably, a first gap is provided between the first air inlet 51 and the light emitting element base 22, which is favorable for sufficient heat exchange between the light emitting element base 22 and air, so as to improve the heat dissipation efficiency of the light emitting element base 22.

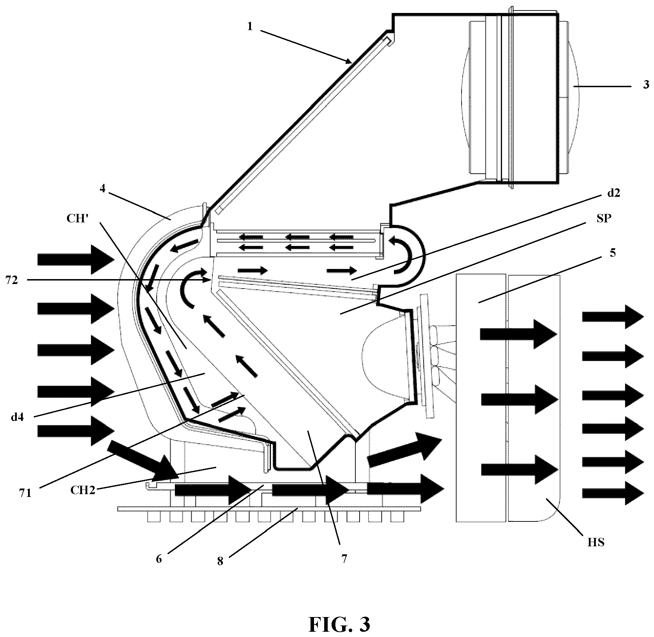

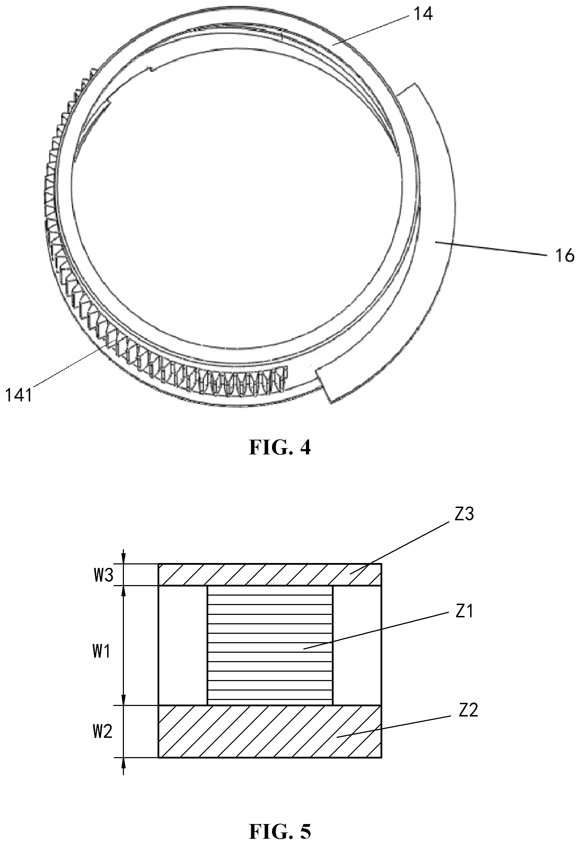

FIG. 3 schematically illustrates a circulation path of internal air inside an accommodating space and a circulation path of external air outside the accommodating space of a projection device according to some exemplary embodiments of the present disclosure. FIG. 5 is an enlarged schematic diagram of a first air inlet of a first fan of a projection device according to some exemplary embodiments of the present disclosure, which highlights various functional regions of the first air inlet. Referring to FIGS. 1A to 1D, FIG. 3 and FIG. 5, the first air inlet 51 includes a first region Z1 covered by an orthographic projection of the light emitting element base 22 on the first air inlet 51 and a second region Z2 located on a side of the first region Z1 away from the projection lens 3. The second region Z2 is located on the side of the first region Z1 away from the projection lens 3, so that hot air passing through the first heat sink 4 can enter the first fan 5 in an unhindered way, and the heat dissipation efficiency of the first fan is increased.

Preferably, the first air inlet 51 further includes a third region Z3 located on a side of the first region Z1 away from the second region Z2, so that the space for the air flowing is increased, and the heat dissipation efficiency is improved.

Further preferably, a width W3 of the third region Z3 is smaller than a width W2 of the second region Z2, that is, the first region Z1 is arranged closer to the projection lens 3 within a whole height range of the first air inlet 51, so that the space below for the air flowing can be increased, and the heat dissipation efficiency can be improved.

In some embodiments, as shown in FIG. 1A, the projection device further includes a base plate 10 disposed opposite to the housing 1; a first outer air duct CH1 is formed between the housing 1 and the base plate 10 and is configured such that air enters the first fan 5 after passing through the first outer air duct CH1 when the projection device is operating. Preferably, the first outer air duct CH1 is disposed opposite to the second region Z2.

Optionally, the base plate 10 is disposed opposite to a portion of the first heat sink 4, and the portion of the first heat sink 4 and the base plate 10 form the first outer air duct CH1. Referring to FIG. 1A, the first heat sink 4 includes a first heat sink first portion 41 disposed opposite to the base plate 10. It is understood that the first heat sink first portion 41 is disposed opposite to the base plate 10, which means that the first heat sink first portion 41 is parallel to the base plate 10 or that an angle between the first heat sink first portion 41 and the base plate 10 is an acute angle of less than 45°. Therefore, the heat dissipated by the first heat sink 4 can more effectively enter the first outer air duct CH1, and the heat dissipation efficiency is improved. Preferably, the acute angle between the first heat sink first portion 41 and the base plate 10 is less than or equal to 20°; for example, the acute angle between the first heat sink first portion 41 and the base plate 10 may be in the range of [5°, 15°]; for example, the acute angle between the first heat sink first portion 41 and the base plate 10 may be in the range of [8°, 12°]; for example, the acute angle may be 10°. It should be noted that when the first heat sink first portion 41 includes a wrapping portion wrapping the accommodating space SP and heat dissipation fins located on a side of the wrapping portion away from the accommodating space SP, the acute angle between the first heat sink first portion 41 and the base plate 10 can be understood as an acute angle between the wrapping portion of the first heat sink first portion 41 and the base plate 10.

Specifically, the portion of the first heat sink 4 and the base plate 10 form the first outer air duct CH1, which is understood to mean that the base plate 10 and the first heat sink 4 include a gap therebetween that forms at least a portion of the first outer air duct CH1. In some embodiments, the first heat sink 4 may also be in direct contact with the base plate 10, and the first heat sink 4 includes a path that may allow air to flow, so that the air duct formed by the first heat sink 4 and the base plate 10 is at least a part of the first outer air duct.

In some embodiments, the base plate 10 includes a base plate support surface 101 and a base plate support foot 102, the base plate support foot 102 is closer to (e.g., in direct contact with) a surface on which the projection device is placed than the base plate support surface 101; the base plate 10 may further include a base plate carrying structure 103 for supporting the housing 1.

In some embodiments, as shown in FIG. 1D and FIG. 3, the projection device may further include a circuit board 8 disposed opposite to the housing 1, and a second outer air duct CH2 is formed between the housing 1 and the circuit board 8 and is configured such that air enters the first fan 5 after passing through the second outer air duct CH2 when the projection device is operating. The second outer air duct CH2 is disposed opposite to the second region Z2.

For example, the circuit board 8 may be a system board. The circuit board 8 may be configured to drive at least one of the display panel, the light emitting element, the fan, and a focusing component.

Optionally, the circuit board 8 is disposed opposite to a portion of the first heat sink 4, and the portion of the first heat sink 4 and the circuit board 8 form the second outer air duct CH2. Referring to FIGS. 1B and 1C, the first heat sink 4 includes the first heat sink first portion 41 disposed opposite to the circuit board 8. It is understood that the first heat sink first portion 41 is disposed opposite to the circuit board 8, which means that the first heat sink first portion 41 is parallel to an extending surface of the circuit board 8 or that an angle between the first heat sink first portion 41 and the extending surface of the circuit board 8 is an acute angle of less than 45°. Therefore, the heat dissipated by the first heat sink 4 can more effectively enter the second outer air duct CH2, and the heat dissipation efficiency is improved. Preferably, the acute angle between the first heat sink first portion 41 and the extending surface of the circuit board 8 is less than or equal to 20°; for example, the acute angle between the first heat sink first portion 41 and the base plate 10 may be in the range of [5°, 15°]; for example, the acute angle between the first heat sink first portion 41 and the base plate 10 may be in the range of [8°, 12°]; for example, the acute angle may be 10°. It should be noted that when the first heat sink first portion 41 includes a wrapping portion wrapping the accommodating space SP and heat dissipation fins located on a side of the wrapping portion away from the accommodating space SP, the acute angle between the first heat sink first portion 41 and the base plate 10 can be understood as an acute angle between the wrapping portion of the first heat sink first portion 41 and the base plate 10.

Specifically, the portion of the first heat sink 4 and the circuit board 8 form the second outer air duct CH2, which is understood to mean that the circuit board 8 and the first heat sink 4 include a gap therebetween that forms at least a portion of the second outer air duct CH2. In some embodiments, the first heat sink 4 may also be in direct contact with the circuit board 8, and the first heat sink 4 includes a path that may allow air to flow, so that the air duct formed by the first heat sink 4 and the circuit board 8 is at least a part of the second outer air duct CH2.

In some embodiments, the projection device further includes a support frame, which is closer to the surface on which the projection device is placed than the housing 1 for supporting the housing 1 in normal use. For example, the support frame includes a support surface 61 and a support foot 62. In normal use, the support foot 62 is closer to (e.g. in direct contact with) the surface on which the projection device is placed than the support surface 61 for supporting the support surface 61; the support surface 61 serves to carry the housing 1. In some embodiments, the circuit board 8 is located on a side of the support surface 61 away from the housing 1; preferably, the support surface 61 includes a hollowed-out portion extending therethrough, so that heat from the circuit board 8 can be timely taken away through the second outer air duct CH2, thereby preventing heat accumulation.

Referring to FIGS. 1D and 3, the first heat sink 4 may have an arcuate shape as a whole. Therefore, the first heat sink 4 sufficiently wraps the main heat dissipation region inside the projection device on the rear side of the projection device, so that heat can be exchanged sufficiently, and the improvement of the heat dissipation efficiency is facilitated.

In some embodiments, referring to FIGS. 1A to 1E and FIG. 3, the first heat sink 4 includes a wrapping portion 44 and a plurality of first heat dissipation fins 46 located on a side of the wrapping portion 44 away from the accommodating space SP, the wrapping portion 44 covers the third opening P3, each of the plurality of first heat dissipation fins 46 includes a first heat dissipation portion, and the first heat sink 4 is configured to allow air to enter the first fan 5 from the first air inlet 51 after passing through the plurality of first heat dissipation portions. For example, the number of the first heat dissipation fins may be 15 to 25, a protruding height of each first heat dissipation fin may be 10 mm to 20mm, and a width of each first heat dissipation fin may be 20 mm to 38 mm.

The first heat sink 4 is, for example, a cast aluminum heat sink.

Alternatively, the projection device may include at least one of the circuit board 8 and a base plate 6. In some embodiments, when the projection device includes the circuit board 8, at least a portion of the first heat sink portion is positioned between the wrapping portion 44 and the circuit board 8. In some embodiments, when the projection device includes the base plate 6, at least a portion of the first heat sink portion is located between the wrapping portion 44 and the base plate 6. In this way, the heat dissipation effect of the first heat dissipation fins 46 is effectively achieved. In practical applications, it is preferable to dispose the first heat sink portion along the direction of airflow so as not to obstruct the airflow. Preferably, the first heat sink portion is streamlined so as not to obstruct the airflow. For example, the first heat sink portion may be bent curvingly as the first heat sink portion extends curvingly.

The wrapping portion 44 includes a first wrapping sub-portion on a side on which the rear surface of the housing 1 is located (as shown in FIG. 1D, the first wrapping sub-portion wraps the third opening on a side on which the rear surface of the housing 1 is located, and for example, has an arch shape), and a second wrapping sub-portion on a different side from the side on which the rear surface of the housing 1 is located (as shown in FIG. 1D, the second wrapping sub-portion is located on the lower side of the first wrapping sub-portion; and the second wrapping sub-portion and the first wrapping sub-portion extend in different direction, and wrap the third opening together); the second wrapping sub-portion and the first wrapping sub-portion are sequentially arranged. A transition between the first wrapping sub-portion and the second wrapping sub-portion adopts a corner form. Alternatively, an arc radius of the transition between the first wrapping sub-portion and the second wrapping sub-portion is smaller than that of a transition between a first heat dissipation portion corresponding to the first wrapping sub-portion and a first heat dissipation portion corresponding to the second wrapping sub-portion. A portion of the first wrapping sub-portion close to the second wrapping sub-portion and a portion of the second wrapping sub-portion close to the first wrapping sub-portion have an angle (e.g., the corner) greater than 90° and less than 180° therebetween. Optionally, the portion of the first wrapping sub-portion close to the second wrapping sub-portion and the portion of the second wrapping sub-portion close to the first wrapping sub-portion have the angle (e.g., the corner) greater than 90° and less than 150° therebetween, so that a volume of the projection device can be optimized while the heat dissipation area is ensured. For example, the portion of the first wrapping sub-portion close to the second wrapping sub-portion and the portion of the second wrapping sub-portion close to the first wrapping sub-portion have the angle greater than 90° and less than 150° therebetween. Preferably, the portion of the first wrapping sub-portion close to the second wrapping sub-portion and the portion of the second wrapping sub-portion close to the first wrapping sub-portion have the angle in a range of [120°,145°] therebetween.

For example, the first heat sink first portion 41 includes the second wrapping sub-portion and the first heat dissipation portion corresponding to the second wrapping sub-portion.

The circuit board 8 includes a second heat dissipation portion 81 located on a side of the circuit board 8 close to the housing 1; and air passing through the first fan 5 may pass through the second heat dissipation portion 81 firstly, so that heat dissipation efficiency is further improved. The second heat dissipation portion 81 may include third heat dissipation fins; preferably, the third heat dissipation fins extend in the air flow direction.

In some embodiments, as shown in FIG. 1E, in the operating state of the projection device, the projection lens 3 is higher than the light source component 2; the housing 1 further includes a bottom surface and a top surface, the bottom surface is lower than the top surface, the front and rear surfaces are connected to the top and bottom surfaces, respectively. In the operating state of the projection device, the projection device is configured to form a first outer air duct CH1 between the bottom surface and a placement surface GD of the projection device (or a surface GD where the projection device is placed), the air entering the first air inlet 51 includes air passing through the first outer air duct CH1, and the air entering the air duct carries the heat radiated from the first heat sink 4. In some embodiments, the projection device further includes a support structure 11 for supporting the housing 1.

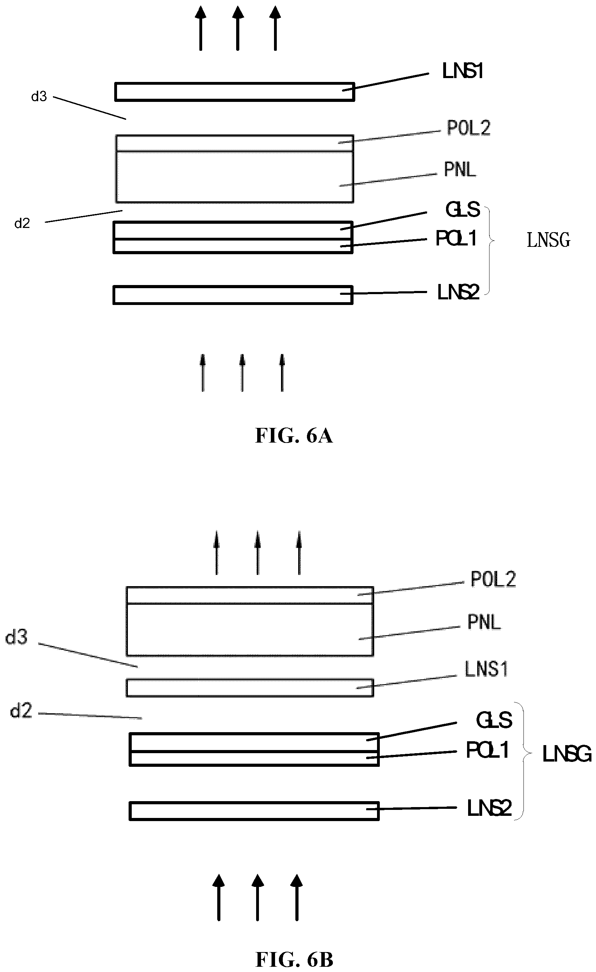

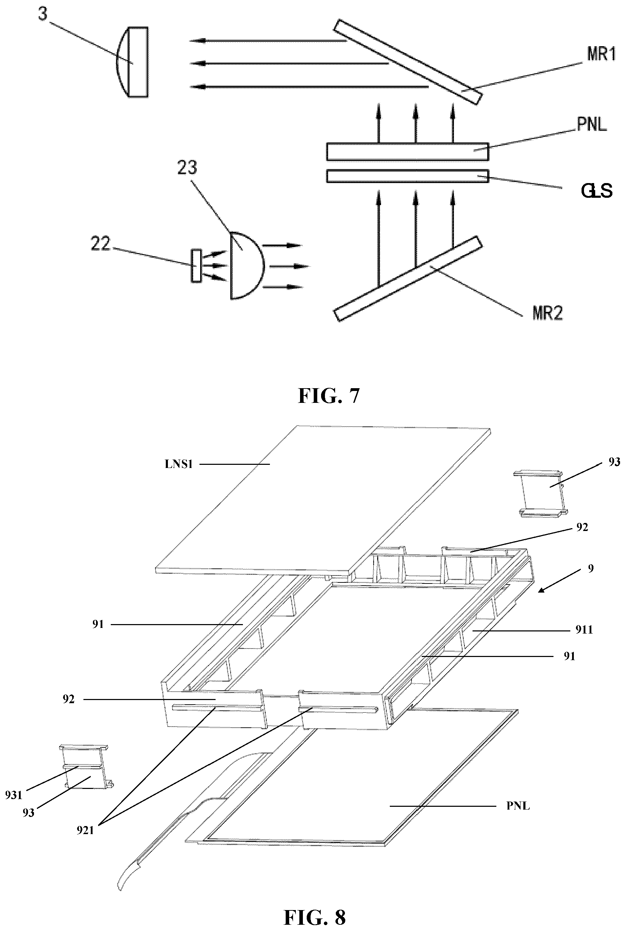

FIGS. 6A and 6B schematically illustrate a positional relationship among a display panel, a first polarizing element, a second polarizing element, a light-transparent part, a first lens, and a second lens along a light traveling direction of a projection device according to some exemplary embodiments of the present disclosure. FIG. 7 schematically illustrates an optical path of a projection device according to some exemplary embodiments of the present disclosure in a simplified manner. Referring to FIG. 6A to FIG. 7, the projection device further includes: a first polarizing element POL1, a second polarizing element POL2, a display panel PNL, a first lens LNS1 and a second lens LNS2.

It should be understood that, the display panel PNL functions as a light valve for controlling transmittance through pixels of the display panel PNL. A display function of the display panel PNL is realized by projecting an image.

The display panel PNL may be a liquid crystal display panel. The specific type of the liquid crystal display panel is not limited in the embodiments of the present disclosure. For example, the liquid crystal display panel may be a vertical alignment (VA) type or a twisted nematic (TN) type display panel. In this case, a common electrode is disposed on the second base substrate. Alternatively, the liquid crystal display panel may be an in plane switching (IPS) type display panel, a fringe field switching (FFS) type display panel, or an advanced super dimension switch (ADS) type display panel. In this case, the common electrode is provided on a first base substrate, so long as an electric field is generated between a pixel electrode and the common electrode to drive liquid crystal molecules to rotate.

The first polarizing element POL1 is disposed on a light outgoing side of the light source component 2, and is configured to convert the light emitted from the light source component 2 into first polarized light having a first polarization direction.

The display panel PNL is disposed on a side of the first polarizing element POL1 away from the light source component 2.

In some embodiments, the projection device changes a polarization state of light (the first polarized light) entering the display panel PNL by controlling deflection of the liquid crystal molecules of the display panel PNL. When the display panel PNL cooperates with the second polarizing element POL2 located on a side of the display panel PNL away from the first polarizing element POL1, a display screen may be generated.

The first lens LNS1 is disposed on a side of the display panel PNL away from the light source component 2. Alternatively, the first lens LNS1 may be disposed between the display panel PNL and the first polarizing element POL1.

The second polarizing element POL2 is disposed on the side of the display panel PNL away from the first polarizing element POL1. The second polarizing element POL2 may be configured to emit out polarized light in one of the first polarization direction and a second polarization direction through the projection lens, wherein the first polarization direction and the second polarization direction are perpendicular to each other. In some exemplary embodiments, the second polarizing element POL2 is a polarizing film material and is attached to a light outgoing surface of the display panel PNL.

In some exemplary embodiments, the display panel PNL may adjust a polarization direction of the first polarized light to emit the second polarized light. For example, a polarization direction of the second polarized light is between the first polarization direction and the second polarization direction, and the first polarization direction is perpendicular to the second polarization direction. It should be noted that the polarization direction of the second polarized light is between the first polarization direction and the second polarization direction, which includes a case where the polarization direction of the second polarized light is the same as the first polarization direction, and a case where the polarization direction of the second polarized light is the same as the second polarization direction.

In some exemplary embodiments, the first polarizing element POL1 is a polarizing film material and is attached to a light incident surface of the display panel PNL. In other exemplary embodiments, there is a space between the first polarizing element POL1 and the display panel PNL, so that heat generated by the first polarizing element POL during filtering is difficult to be conducted to the display panel PNL, and thus, the influence on the display effect due to too high temperature of the liquid crystal display panel is avoided.

In some embodiments, the projection device further includes a light-transparent part GLS. For example, the first polarizing element POL is a polarizing film material and is attached to the light-transparent part GLS. There is a space between the light-transparent part GLS and the display panel PNL, so that there is a space between the first polarizing element POL1 and the display panel PNL, and thus, the influence of the heat generated by the first polarizing element POL1 during filtering on the operation of the display panel PNL is avoided. A material of the light-transparent part GLS is, for example, glass; the material of the light-transparent part GLS may have a thermal insulation function, for example.

In some embodiments, surfaces of the light-transparent part GLS opposite to each other are flat, and thus, light is not converged or diverged by the light-transparent part GLS. It should be understood that, the light-transparent part GLS does not function as an optical lens.

In some embodiments, the first polarizing element POL1 is attached to a side of the light-transparent part GLS away from the display panel PNL, so that due to the blocking of the light-transparent part GLS, the heat generated by the first polarizing element POL1 receiving light can be prevented from being transferred to the display panel PNL or the amount of the transferred heat can be reduced, thereby preventing the display effect from being affected.

In some embodiments, the first polarizing element POL1 may also be attached to a side of the light-transparent part GLS close to the display panel PNL.

In some embodiments, the display panel PNL includes an array substrate and a color filter substrate, wherein the second polarizing element POL2 is located on a side of the array substrate away from the color filter substrate. For example, the second polarizing element POL2 is attached to the array substrate. For example, the second polarizing element POL2 is located on the light outgoing side of the display panel, and the projected light transmitted through the display panel PNL firstly passes through the color filter substrate and then is emitted out through the array substrate, so that the heat accumulated on a surface of the color filter substrate can be reduced, a surface temperature of the display panel can be reduced, and the display panel can be protected.

In some embodiments, as shown in FIG. 6A, the first lens LNS1 is disposed on a side of the display panel PNL away from the light source component 2, and the light-transparent part GLS is between the light source component 2 and the display panel PNL with a second gap d2 therebetween. In other embodiments, as shown in FIG. 6B, the first lens LNS1 is disposed between the display panel PNL and the first polarizing element POL1, the light-transparent part GLS is located between the light source component 2 and the first lens LNS1, and the light-transparent part GLS and the first lens LNS1 have the second gap d2 therebetween.

In some exemplary embodiments, as shown in FIGS. 6A and 6B, the second gap d2 may be a gap located at a light outgoing side of the light-transparent part GLS and disposed adjacent to the light-transparent part GLS; in other exemplary embodiments, the first polarizing element POL1 is attached to the light outgoing side of the light-transparent part GLS, and the second gap d2 is a gap located on a light outgoing side of the first polarizing element POL1 and disposed adjacent to the first polarizing element POL1. It should be noted that two components are adjacent to each other, which may be understood to mean that no other elements are provide between the two components.

Specifically, the first lens LNS1 is a convex lens. In some embodiments, first lens LNS1 may be a fresnel lens or an aspherical lens, preferably the fresnel lens.

In some embodiments, the display device further includes a first mirror MR1 disposed to reflect light emitted from the display panel PNL into the projection lens 3. Specifically, the first mirror MR1 is disposed on a side of the display panel PNL away from the light source component 2, and is disposed on a side of the first lens LNS1 away from the light source component 2. A second mirror MR2 may be a plane mirror.

It should be noted that when it is recited that a first element is positioned on a side of a second element away from the light source component 2, it can be understood that the first element is positioned farther from the light source component 2 in space than the second element, or that the main light firstly passes through the second element and then the first element in an optical path.

In some exemplary embodiments, the second polarizing element POL2 may be the same element as or a different element from the first mirror MR1. Specifically, when the second polarizing element POL2 may be the same element as the first mirror MR1, the first mirror MR1 may be configured to emit out the polarized light in one of the first polarization direction and a second polarization direction through the projection lens 3, and thus, the second polarizing element POL2 is unnecessarily attached to the light outgoing surface of the display panel PNL, so that heat accumulation at a local position is reduced, and a higher projected brightness for a picture can be set for a projector.

In some embodiments, when the second polarizing element POL2 may be the same element as the first mirror MR1, the first mirror MR1 may include: a plurality of optical layers integrated together, wherein the plurality of optical layers may be disposed on a side of a substrate (e.g., a glass substrate) close to the display panel PLN, and inclined to the display panel PLN. Any two adjacent optical layers have different refractive indexes, so that optical interfaces are formed; each optical interface corresponds to one wave band, different optical interfaces correspond to different wave bands, and each optical interface is configured to transmit polarized light with a wavelength within the corresponding wave band and with the first polarization direction; and reflect polarized light with the wavelength within the corresponding wave band and with the second polarization direction. The number of the optical layers 42 may be 3, 4, 5, and so on. For example, there are three optical interfaces among the optical layers 42, where a first optical interface is configured to transmit light in a red light wave band and with the first polarization direction and reflect light in the red light wave band and with the second polarization direction; a second optical interface is configured to transmit light in a green light wave band and with the first polarization direction and reflect light in the green light wave band and with the second polarization direction; a third optical interface is configured to transmit light in a blue light wave band and with the first polarization direction and reflect light in the blue light wave band and with the second polarization direction.

Through the interfaces among the optical layers, the polarized light with the first polarization direction in natural light can be transmitted and the polarized light with the second polarization direction in the natural light can be reflected. Alternatively, the refractive indexes of the optical layers may be adjusted, so that each optical interface in the first mirror MR1 is configured to transmit the polarized light with the wavelength within the corresponding wavelength band and with the second polarization direction, and reflect the polarized light with the wavelength within the corresponding wavelength band and with the first polarization direction.

Referring to FIGS. 1D and 3, the projection device further includes a second fan 7 disposed in the accommodating space SP for promoting internal air to circulate in the accommodating space SP, wherein the internal hot air exchanges heat with external cold air through the first heat sink 4. In some exemplary embodiments, the second fan 7 is a centrifugal fan, and includes a second air inlet 71 and a second air outlet 72, wherein the second air outlet 72 is configured to discharge the internal air, and the second air inlet 71 is configured to suck the internal air, so that the internal air circularly flows in at least a partial region of the accommodating space SP.

In some embodiments, the second air inlet 71 is disposed opposite to the first heat sink 4, so that the internal air cooled by the first heat sink 4 directly enters the second air inlet 71 for the next air circulation, thereby achieving effective cooling inside the accommodating space SP.

In some embodiments, a flow path of the internal air includes a second gap d2, that is, the internal air is driven by the second fan 7 to flow through the second gap d2 to take away the heat near the second gap d2.

In some embodiments, referring to FIGS. 6A and 6B, the first lens LNS1 and the display panel PNL have a third gap d3 therebetween, a flow path of the internal air includes the third gap d3, and the third gap d3 and the second gap d2 are disposed side by side, and a flow direction of the internal air in the second gap d2 and a flow direction of the internal air in the third gap d3 are the same or opposite to each other. In some exemplary embodiments, referring to FIG. 6A, the second gap d2 and the third gap d3 are respectively located on the light incident side and the light outgoing side of the display panel PNL, and a flow direction of the internal air on the light incident side is opposite to that of the internal air on the light outgoing side. Specifically, the third gap d3 and the second gap d2 are arranged side by side, which means that an extending direction of the third gap d3 and an extending direction of the second gap d2 are the same or substantially the same, for example, an angle between the extending direction of the third gap d3 and the extending direction of the second gap d2 is within 30°.

In some exemplary embodiments, the internal air sequentially flows through the second air outlet 72, the second air duct including the second gap d2, a third air duct including the third gap d3, a first inner air duct CH', and the second air inlet 71 in an internal circulation. At least a portion of the first heat sink 4 constitutes a portion of a side wall of the first inner air duct CH'. Specifically, as shown in FIG. 3, the first heat sink 4 includes a wrapping portion, at least a portion of the wrapping portion constitutes a portion of a side wall of the first inner air duct CH'. Preferably, referring to FIGS. 1B and 1C, the first heat sink 4 further includes second heat dissipation fins 48 extending into the first inner air duct CH', so that the heat exchange efficiency of the first heat sink 4 with the outside can be increased. For example, the number of the second heat dissipation fins 48 may be 15 to 25, a protruding height of each second heat dissipation fin 48 may be in the range of [10mm, 20mm], and a width of each second heat dissipation fin 48 may be in the range of [20mm, 38mm]. An extending direction of each second heat dissipation fin 48 is the same as that of the first inner air duct CH'.

In some embodiments, as shown in FIG. 3, a width of the first inner air duct CH' is gradually widened along a direction in at least a partial region extending in the flow direction of the air in the first inner air duct CH', so that a heat exchange area between the first inner air duct CH' and the outside air is increased, and the heat dissipation efficiency is improved. Preferably, a difference between a width of a widest portion of the first inner air duct CH' and a width of the first inner air duct CH' at its inlet is in a range of 10mm to 20mm, wherein the inlet of the first inner air duct CH' is connected to the third air duct, and a width of the first inner air duct CH' represents a width of the first inner air duct CH' in a direction perpendicular to a plane where the second air inlet 71 is located. For example, the width of the widest portion of the first inner air duct CH' is 2 to 3 times the width of the first inner air duct CH' at its inlet. For example, the width of the widest portion of the first inner air duct CH' is 2 to 3 times that of the third gap d3. For example, the widest portion of the first inner air duct CH' is disposed opposite to the second air inlet 71.

In some embodiments, the first inner air duct CH' is directly connected to the second air inlet 71, so that the internal air cooled by the first heat sink 4 directly enters the second air inlet 71 for the next air circulation, thereby achieving effective cooling inside the accommodating space SP.

In some embodiments, the display device includes a second mirror MR2 configured to reflect the light emitted from the light source component 2 into the display panel PLN. The second mirror MR2 may be a plane mirror.

In some embodiments, the display device includes a second lens LNS2 positioned between the second mirror MR2 and the display panel PLN and configured to collimate the light reflected by the second mirror MR2, so that the light source component 2 is a collimating light source component.

In some exemplary embodiments, the second lens LNS2 is located on a side of the light-transparent part GLS away from the display panel PLN.

In some exemplary embodiments, the second lens LNS2 is positioned between the first lens LNS1 and the light source component 2.

Specifically, the second lens LNS2 is a convex lens. In some exemplary embodiments, the second lens LNS2 may be a fresnel lens or an aspherical mirror, preferably a fresnel lens.

In some embodiments, as shown in FIG. 3, the second fan 7 is located on a side of the second mirror MR2 away from the light source component 2; a fourth gap d4 is formed between the second fan 7 and the first heat sink 4, and the first inner air duct CH' includes the fourth gap d4.

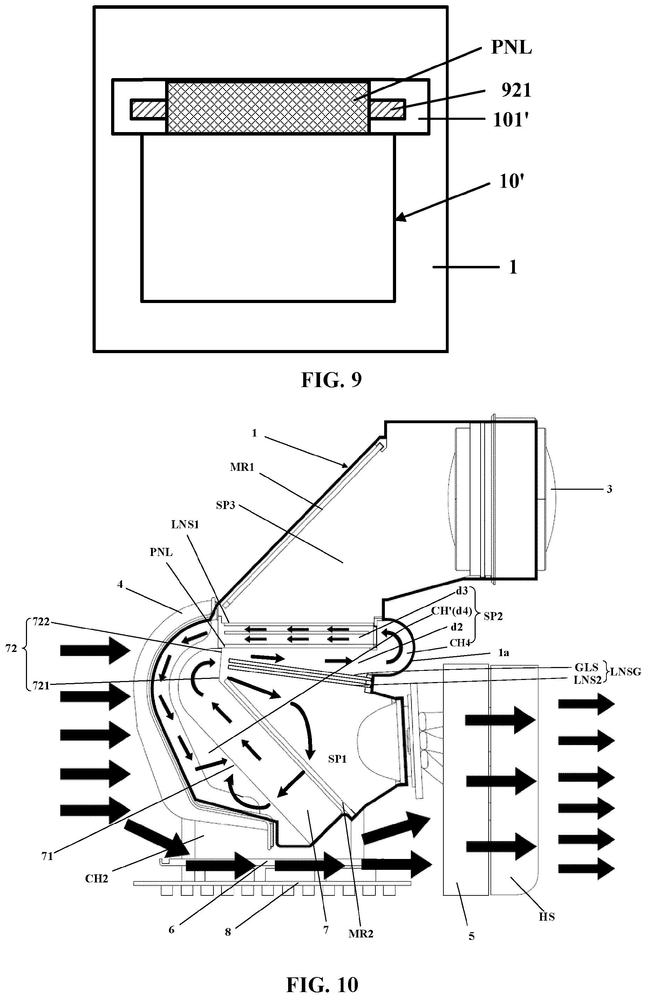

FIG. 8 schematically shows that a display panel and a first or second lens are fixed to a fixing frame by a snap in an exploded view. FIG. 9 schematically illustrates a case in which a display panel is matched with a groove in an inner surface of a housing of a projection device according to some exemplary embodiments of the present disclosure in a simplified manner. Referring to FIGS. 8 and 9, the projection device further includes a fixing frame 9, and the display panel PNL and the first lens LNS1 are respectively inlaid on two opposite sides of the fixing frame 9. The first lens LNS1 and the display panel PNL have the third gap d3 therebetween. The fixing frame 9 includes two through sides 91 disposed oppositely, and one of the two through sides 91 is disposed close to the first heat sink 4. Preferably, each through side includes hollowed-out portions 911 with an area occupying more than 80% of an area of the through side 91. In particular, the fixing frame 9 includes two positioning sides 92 disposed oppositely and connected to the two through sides 91. Each positioning side 92 includes a positioning portion for cooperating with the housing 1 to achieve the positioning of the fixing frame 9. For example, the positioning portion includes ribs 921, and the ribs 921 extend in the same direction as the display panel PNL. For example, the fixing frame 9 further includes U-shaped clips 93; the display panel PNL, the fixing frame 9, and the first lens LNS1 are all provided between both ends of each U-shaped clip 93, and each clip 93 clamps at least one positioning side 92 of the fixing frame 9, that is, the U-shaped clip defines the display panel PNL and the first lens LNS1 in a thickness direction of the U-shaped clip. A matching rib 931 is provided at a position where the U-shaped clip 93 defines the positioning side 92 of the fixing frame 9. Preferably, the matching rib 931 and the ribs 921 of the positioning portion are disposed continuously, to form a continuous linear slide rail. For example, as shown in FIG. 9, an inner surface 10' of the housing 1 includes a groove 101', and the ribs 921 cooperate with the groove 11 to achieve the positioning and sliding of the fixing frame 9. Each rib 921 is configured to be slidable in the groove 101' to pull the display panel PNL out of the housing 1 or put the display panel PNL into the housing 1. It should be noted that the groove 101' may be a part of the housing 1, or may be a mechanical structure connected to the housing 1.

In some exemplary embodiments, the first heat sink 4 is detachable from the housing 1. The fixing frame 9 may be put into or taken out from the projection device after the first heat sink 4 is detached from the housing 1, thereby facilitating the maintenance of the projection device.

FIG. 4 schematically illustrates a focus adjuster and a baffle plate of a projection device according to some exemplary embodiments of the present disclosure. Referring to FIGS. 2 and 4 together, the projection device includes a focusing component for adjusting a focus of the projection lens 3, including a sensing component 13 and a driving component. The sensing component 13 includes a distance sensor configured to measure a projection distance between the projection lens 3 and a projected image (e.g. a projection screen). For example, the distance sensor may be a TOF (time of flight) sensor. The driving component is configured to drive the projection lens 3 to adjust the focus according to the measured projection distance.

In some exemplary embodiments, the driving component includes a driving motor 11, an actuator 12, and a focus adjuster 14 provided on the projection lens; the driving motor 11 drives the actuator 12 to move, and the actuator 12 is coupled to the focus adjuster 14 to adjust the focus of the projection lens 3. For example, a rotating shaft of the driving motor 11 may be fixedly connected to the actuator 12. In some exemplary embodiments, the actuator 12 includes a first gear, and the focus adjuster 14 includes a transmission gear 141 provided at an outer circumference of the projection lens 3, and the first gear and the transmission gear 141 are engaged with each other and coupled with each other.

In some exemplary embodiments, the focusing component further includes a limiting component for controlling a focusing range for the projection lens. The limiting component includes an optical coupler and a baffle plate 16, and a relative position of the baffle plate 16 and the focus adjuster 14 is fixed. The optical coupler is configured to determine whether the light is shielded or not by the baffle plate 16 and to send a signal for providing a command to the driving motor 11.

In some exemplary embodiments, as shown in FIG. 4, the focus adjuster 14 is a focusing ring, the baffle plate 16 and the transmission gear 141 are secured around the focusing ring. The optical coupler includes a light emitter and a light receiver, and the baffle plate 16 is configured to block an optical path between the light emitter and the light receiver.

In some exemplary embodiments, the optical coupler is configured to: transmit a first control signal to the circuit board to control the motor 11 to rotate for autofocusing when the optical path between the light emitter and the light receiver is blocked by the baffle plate 16; transmit a second control signal to the control circuit board to brake (stop) the motor 11 when the optical path between the light emitter and the light receiver is not blocked by the baffle plate 16.

A transmission ratio of the first gear to the transmission gear 141 is in a range from 1:3.5 to 1:4.5; a ratio of a root circle diameter of the first gear to a root circle diameter of the transmission gear 141 is in a range from 1:5.0 to 1:6.0; a ratio of a addendum circle diameter of the first gear to a addendum circle diameter of the transmission gear 141 is in a range from 1:3.2 to 1:4.2. In this way, under the prerequisite that the whole volume of the projection device is reduced to the maximum extent, such the first gear and the transmission gear 141 can guarantee the high driving efficiency and the smoothness and guarantee the focusing accuracy.

In some exemplary embodiments, the circuit board 8 is electrically connected to the display panel PNL to control the display panel PNL.

In some exemplary embodiments, the circuit board 8 is electrically connected to the driving component to control the driving component.

Optionally, the second mirror MR2 and the first mirror MR1 are in the accommodating space SP and detachably mounted on the housing 1.

Optionally, a gas-tight sealing filler is disposed between the second opening P2 and the projection lens 3 to obtain a better leakproofness of the accommodating space SP.

Optionally, a gas-tight sealing filler is disposed between the first opening P1 and the plano-convex lens 23 to obtain a better leakproofness of the accommodating space SP.

Optionally, a gas-tight sealing filler is disposed at a portion of the first heat sink 4 attached to the third opening P3 of the housing 1 to obtain a better leakproofness of the accommodating space SP.

Optionally, the gas-tight sealing filler is selected from at least one of a silica gel filler or a rubber filler.

Optionally, referring to FIG. 3, the projection device is configured such that the internal air flow is promoted by the second fan 7 to sequentially flow through the following components in the gas-tight accommodating space SP: the second air outlet 72 of the second fan 7, the second gap d2, the third gap d3, the fourth gap d4, and the second air inlet 71 of the second fan 7 for the thermal circulation.

Optionally, an elongated aperture is formed on at least one of the left and right sides of the housing 1 at a position corresponding to the light-transparent part GLS, the aperture has a width greater than or equal to a thickness of the light-transparent part GLS, so that the light-transparent part GLS can be directly pulled out of or put into the accommodating space SP through the aperture, thereby facilitating replacement and maintenance of the light-transparent part GLS.

Optionally, referring to FIG. 1D, the projection device further includes a second heat sink HS located outside the housing 1 and in front of the light emitting component 2. The second heat sink HS is thermally coupled to the light emitting element base 22 of the light source component 2 by at least one heat pipe Cu, to facilitate heat dissipation in the vicinity of the light source component 2. The second heat sink HS is larger in size than the light emitting element base 22 and spaced apart from the light emitting element base 22 by a certain distance, to place the first fan 5. In other words, the first fan 5 is disposed between the light emitting element base 22 and the second heat sink HS. Materials of the at least one heat pipe Cu and the light emitting element base 22 include copper. In some exemplary embodiments, the second heat sink HS includes heat dissipation fins formed by stacking a plurality of aluminum sheets, and each heat pipe Cu has one end connected to the light emitting element base 22 and the other end inserted into the second heat sink HS from a side thereof. The heat pipe Cu is connected to the light emitting element base 22 by, for example, soldering.

Optionally, referring to FIG. 2, the projection device further includes a windshield 15 disposed on left and right sides of the projector, so as to facilitate the first fan 5 to suck the hot air near the first heat sink 4. Specifically, the windshield 15 is provided at least on both sides of the first outer air duct CH1.

Optionally, referring to FIG. 3, the projection device is configured such that the outside air is promoted by the first fan 5 to sequentially flow through the following components outside the gas-tight accommodating space SP: the first outer air duct CH1 formed among the plurality of first heat dissipation fins of the first heat sink 4, the housing 1 and the base plate 6 (or the second outer air duct CH2 formed between the housing 1 and the circuit board 8, or a third outer air duct CH3 formed between the housing 1 and the placement surface GD), the first air inlet 51 of the first fan 5, and the first air outlet 52 of the first fan 5, so as to dissipate heat to the external environment.

In addition to the technical effects described in the first few paragraphs of the detailed description, the projection device according to the present disclosure has the following advantageous effects.

On the other hand, a conventional single LCD projection device on the market does not have the function of autofocusing. When such the projection device without the function of autofocusing is used, it is necessary to manually focus in advance according to a distance between the projection lens and the projection screen. When the projection screen or the projection device moves, the distance between the projection lens and the projection screen correspondingly changes, it is necessary to manually focus again. The operation method for the manual focusing is tedious and poor in focusing effect. In contrast, the projection device provided by the present disclosure includes the distance sensor and the driving component, the distance sensor is capable of measuring the projection distance between the projection lens and the projection screen, and the driving component is capable of driving the focus adjuster for autofocusing based on the projection distance. In this way, compared with a traditional projection device with manual focusing, the projection device in the present disclosure is simple to operate, accurate in focusing and high in efficiency.

On the other hand, by simply providing one second mirror MR2 on the light outgoing side of the light source component 2 to replace the conventional light collimating system including a plurality of complex optical elements, the optical path can be folded more effectively (i.e. a light traveling path is shortened), and on the premise of ensuring a light traveling direction, a volume of the projection device is further reduced, and the portability of the projection device is improved.

On the other hand, considering that the display panel PNL and the first lens LNS1 are easily degraded in use and the replacement of the degraded display panel PNL and the degraded first lens LNS1 is laborious in a conventional product, the first lens LNS1 and the display panel PNL are clamped together by the fixing frame and the U-shaped clips in the present disclosure, so that the integral and compact display unit is provided with a good leakproofness as a whole, a stable structure, the convenient and rapid disassembly, and the convenient maintenance and replacement.

FIG. 10 schematically illustrates a circulation path of internal air inside an accommodating space and a circulation path of outer air outside the accommodating space of a projection device according to further exemplary embodiments of the present disclosure. Like the projection device in FIG. 3, the projection device in FIG. 10 also includes: the housing 1, the light source component 2 and the projection lens 3, the accommodating space is formed inside the projection lens 3, the second mirror MR2, the second fan 7 and the lens component LNSG are provided in the accommodating space, and the second mirror MR2 is provided on the light outgoing side of the light source component 2 for reflecting the light emitted from the light source component 2 into the lens component LNSG, the lens component LNSG is configured to collimate the light. For example, the lens component LNSG may include: the light-transparent part GLS and the second lens LNS2.

In the projection device shown in FIG. 10, the accommodating space includes an air flowing space in which air can flow. Specifically, the air flowing space may include: a first subspace SP1 and a second subspace SP2, wherein the light source component 2, the second mirror MR2, the lens component LNSG and a portion of the housing 1 define the first subspace SP1, and the second subspace SP2 is located around the first subspace SP1. It should be noted that the second subspace SP2 is located around the first subspace SP1, which does not mean that the second subspace SP2 is necessarily a continuous annular structure surrounding the first subspace SP1, and the second subspace SP2 may be located on a side of the first subspace SP1; alternatively, a portion of the second subspace SP2 is located on a side of the first subspace SP1, and the other portion is located on the other side of the first subspace SP1.

The second fan 7 is used for promoting the internal air in the air flowing space to circulate, so that the internal air circularly flows between the first subspace SP1 and the second subspace SP2.

In the projection device, a certain amount of heat may be accumulated in the first subspace SP1 due to the light emitted from the light source component 2, and the second fan 7 in FIG. 10 may promote the internal air to circularly flow between the first subspace SP1 and the second subspace SP2, so as to facilitate heat dissipation of the first subspace SP1, and improve reliability of the projection device. Moreover, the second fan 7 promotes the air in the air flowing space to flow, which facilitates temperature balance in the air flowing space, and facilitates overall heat dissipation and device operation of the projection device.

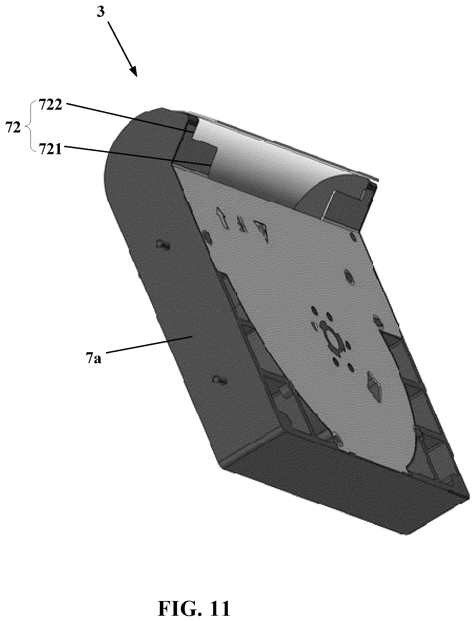

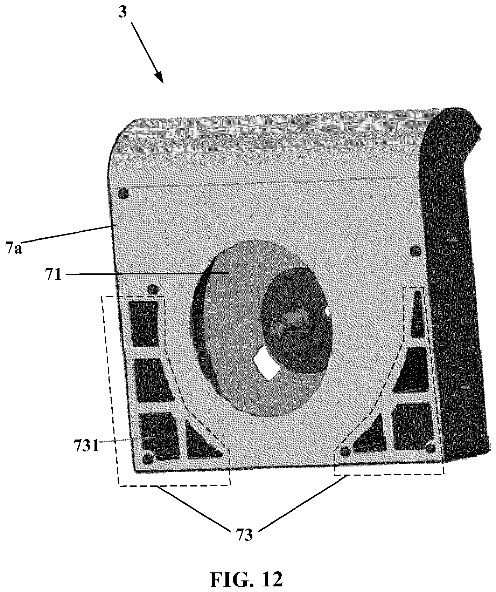

The second fan 7 may be a centrifugal fan. FIG. 11 is a perspective view of a second fan in the projection device of FIG. 10. FIG. 12 is a perspective view of a second fan in the projection device of FIG. 10 from another perspective. As shown in FIGS. 11 and 12, the second fan 7 includes a fan housing 7a and a centrifugal fan in the fan housing 7a. The fan housing 7a includes a functional region and a non-functional region, the functional region includes a region overlapping with the centrifugal fan in an axial direction of the centrifugal fan and a region where a passage for outputting air is located. The second air inlet 71 and the second air outlet 72 are provided in the functional region, and a ventilation portion 73 is provided in the non-functional region and extends through the fan housing 7a.

Referring to FIGS. 10 to 12, the second air inlet 71 is close to the second subspace SP2, and the second air outlet 72 is configured to simultaneously discharge (output) air to the first subspace SP1 and the second subspace SP2. The air discharged into the first subspace SP1 through the second air outlet 72 passes through the ventilation portion 73, enters the second subspace SP2, and then the second air inlet 71; the air discharged through the second air outlet 72 to the second subspace SP2 flows in the second subspace SP2 and then enters the second air inlet 71. In this way, the air in the air flowing space can be circulated.

In some embodiments, as shown in FIG. 10, the second subspace SP2 includes: the first inner air duct CH' between the first heat sink 4 and the second fan 7, at least a part of the first heat sink 4 constitutes a side wall of the first inner air duct CH'. The second air inlet 71 is disposed closely to the first inner air duct CH'. The air discharged through the second air outlet 72 to the first subspace SP1 may sequentially pass through the ventilation portion 73 and the first inner air duct CH', and then enter the second air inlet 71, so that the air carrying the heat of the first subspace SP1 may exchange heat with the first heat sink 4, and the first heat sink 4 dissipates the heat to the external environment.

In the projection device shown in FIG. 10, a position relationship of the optical elements of the projection device along the light traveling direction can be seen from FIGS. 6A and 6B. As shown in FIGS. 6A and 6B, the display panel PNL and the first lens LNS1 are provided on a side of the lens component LNSG away from the second mirror MR2; the lens component LNSG and the display panel PNL have a second gap d2 therebetween, the first lens LNS1 and the display panel PNL have a third gap d3 therebetween, and the second gap d2 is closer to the first subspace SP1 than the third gap d3. In some embodiments, as shown in FIG. 6A, the display panel PNL is positioned on a side of the lens component LNSG away from the second mirror MR2, and the first lens LNS1 is positioned on a side of the display panel PNL away from the lens component LNSG. Alternatively, in other embodiments, as shown in FIG. 6B, the first lens LNS1 may be disposed on a side of the lens component LNSG away from the second mirror MR2, and the display panel PNL may be disposed on a side of the first lens LNS1 away from the lens component LNSG.

The second subspace SP2 further includes a U-shaped air duct, the U-shaped air duct includes the second air duct and the third air duct arranged side by side and connected to each other; the second air duct includes the second gap d2, and the third air duct includes the third gap d3. A flow path of the air discharged into the second subspace SP2 through the second air outlet 72 includes the second air duct, the third air duct, and the first inner air duct CH', that is, the internal air may flow through the second air duct, the third air duct, and the first inner air duct CH', so that the heat of the display panel PNL can be sufficiently dissipated.

As shown in FIG. 10, the U-shaped air duct further includes a fourth air duct CH4 connected to the second air duct and the third air duct. A portion of the second air outlet 72 is disposed closely to the second air duct, and the air discharged into the second subspace SP2 through the second air outlet 72 sequentially passes through the second air duct, the fourth air duct, the third air duct and the first inner air duct CH', and then enters the second air inlet 71. The housing 1 further includes a bent portion 1a corresponding to the fourth air duct CH4, an inner wall of the bent portion 1a is an arc surface, and the arc surface protrudes in a direction away from the second air duct and the third air duct, so that the airflow in the second air duct may enter the third air duct along the arc surface.

In the following embodiment, the second air outlet 72 is divided into a first region and a second region; the second region is a region of the second air outlet 72 opposite to the second subspace SP2; the first region is the remaining region of the second air outlet 72 located on a side of the second region close to the first subspace SP1. An area of the first region is defined as a first effective discharge area S1, and an area of the second region is defined as a second effective discharge area S2. In some embodiments, there is no remaining region on a side of the second region away from the first subspace SP1, and the air discharged at a position away from the second region of the second air outlet 72 is not blocked by the second mirror MR2. In this case, the first region is the region of the second air outlet 72 except the second region.

For example, a side of the lens component LNSG close to both of the display panel PNL and the second air outlet is defined as a first lateral edge, and a reference line at the second air outlet 72 and parallel to the first lateral edge and closest to the first lateral edge is used as a boundary between the first region and the second region.

For example, a region of the second air outlet 72 between the first lateral edge and the display panel PNL is used as the second region.

It should be noted that when the lens component LNSG includes the light-transparent part GLS and the second lens LNS2, and no other structure is disposed between the light-transparent part GLS and the second air outlet 72 (that is, when no other structure may block the air from the second air outlet 72), among lateral edges of the light-transparent part GLS close to a surface of the display panel PNL, a lateral edge close to the second air outlet 72 is used as the first lateral edge. In some embodiments, except for the light-transparent part GLS and the second lens LNS2, the lens component LNSG further includes a fixing element FS, the fixing element FS includes a first fixing element FS1 for limiting the light-transparent part GLS, and the first fixing element FS1 is opposite to the second air outlet 72. In this case, a lateral edge of the first fixing element FS1 close to the display panel PNL and the second air outlet 72 is used as the first lateral edge.

For example, a side of the lens component LNSG close to the second mirror MR2 has a plurality of lateral edges, and among the plurality of lateral edges, a lateral edge close to the second air outlet 72 is defined as a second lateral edge. In some embodiments, a distance between an edge of the second mirror MR2 close to the second air outlet 72 and the second lateral edge in a direction perpendicular to an extending direction of the whole lens component LNSG is greater than or equal to half of a height of the first region.

For example, a distance between the first lateral edge and an extending surface of the display panel PNL close to the first lateral edge is greater than or equal to a height of the second region, so that the air discharged through the second air outlet 72 can smoothly enter the first subspace SP1 and the second subspace SP2.

The first region and the second region of the second air outlet 72 are both strip-shaped, widths of the first region and the second region are respectively defined as lengths of the strip-shaped regions corresponding to the first region and the second region, and heights of the first region and the second region are respectively defined as widths of the strip-shaped regions corresponding to the first region and the second region. It can be understood that the length of each strip-shaped region is greater than the width of the strip-shaped region.

As shown in FIGS. 6A and 6B, the second polarizing element POL2 is provided on a side of the display panel PNL away from the second gap d2. In the display process of the display panel PNL, the second polarizing element POL2 may transmit the polarized light with one of the first polarization direction and the second polarization direction and absorb the polarized light with the other one of the first polarization direction and the second polarization direction. Therefore, the second subspace SP2 generates more heat than the first subspace SP1. To maintain heat balance within the first and second subspaces SP1 and SP2, in some embodiments, the second effective discharge area S2 is set to a ventilation area greater than the first effective discharge area S1. For example, the second effective discharge area S2 is (1, 3] times the first effective discharge area S1, to further maintain heat balance within the first and second subspaces SP1, SP2.

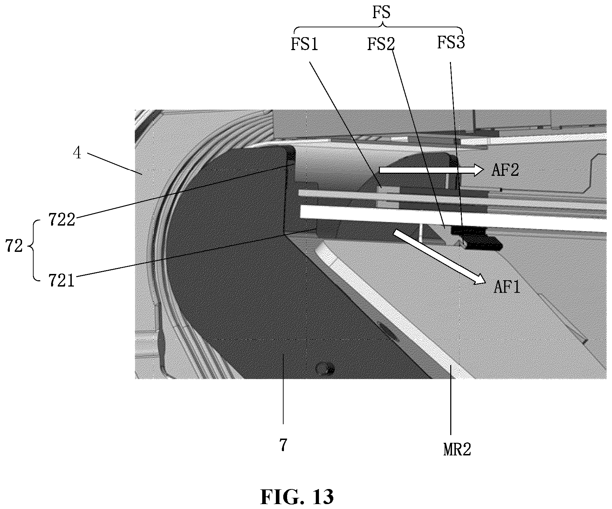

In some embodiments, referring to FIG. 13, the lens component LNSG is configured to shunt air discharged through the second air outlet 72, such that some air AF1 discharged through the second air outlet 72 enters the first subspace SP1 and some air AF2 discharged through the second air outlet 72 enters the second subspace SP2. As above, "the second effective discharge area S2 is (1, 3] times the first effective discharge area S1", so that a volume of the air AF2 discharged through the second air outlet 72 to the second subspace SP2 is larger than that of the air AF1 discharged through the second air outlet 72 to the first subspace SP1 per unit time. Further, the effect can be obtained or closely obtained that the volume of the air AF2 discharged through the second air outlet 72 to the second subspace SP2 is (1, 3] times the volume of the air AF1 discharged through the second air outlet 72 to the first subspace SP1 per unit time. Preferably, the second effective discharge area S2 is 2 times the first effective discharge area S1, thereby maintaining the heat balance in the first subspace SP1 and the second subspace SP2 to the maximum extent.

It is to be understood that when the lens component LNSG includes the light-transparent part GLS and the second lens LNS2, there may be a gap between the light-transparent part GLS and the second lens LNS 2. For example, an end of the gap away from the second air outlet 72 is blocked by a structural member, so that no airflow may be formed in the gap between the light-transparent part GLS and the second lens LNS2.

In some embodiments, referring to FIGS. 10 and 13 together, the second air outlet 72 includes a first opening portion 721 and a second opening portion 722 arranged side by side, wherein at least a part of the first opening portion 721 is configured to discharge air toward the first subspace SP1, and at least a part of the second opening portion 722 is configured to discharge air toward the second subspace SP2. For example, a part of the first opening portion 721 discharges air toward the first subspace SP1; the second opening portion 722 discharges air toward the second subspace SP2 as a whole.

In one example, a width of the second opening portion 722 is greater than that of the first opening portion 721, so that the second effective discharge area S2 is greater than the first effective discharge area S1. The first opening portion 721 and the second opening portion 722 are both strip-shaped, and definitions for their widths and heights can be determined by referring to the definitions for the widths and heights of the second air outlet 72.

In one example, the first opening portion 721 and the second opening portion 722 are both rectangular openings, and may be connected to each other. For example, referring to FIGS. 11 and 13, the first opening portion 721 and the second opening portion 722 are connected to each other, thereby forming a Chinese letter "convex" shaped air outlet structure. The lens component LNSG is located on an air outgoing side of the second air outlet 72. In one example, the first lateral edge of the lens component LNSG is opposite to the first opening portion 721, that is, the boundary between the first region and the second region of the second air outlet 72 is on the first opening portion 721. Alternatively, in other examples, the first lateral edge of the lens component LNSG may be disposed opposite the second opening portion 722; alternatively, the first lateral edge of the lens component LNSG is opposite to the boundary between the first opening portion 721 and the second opening portion 722.

In some embodiments, in order to improve the stability of the lens component LNSG, as shown in FIG. 13, the lens component LNSG may further include a fixing member FS, the fixing member FS is disposed opposite to the second air outlet 72, and an edge of the light-transparent part GLS close to the second air outlet 72 and an edge of the second lens LNS2 close to the second air outlet 72 are fixed on the fixing member FS. For example, the fixing member FS is provided in connection with the housing 1.

For example, an edge of the lens component LNSG away from the second air outlet 72 may be directly or indirectly fixed on the housing 1.

It should be noted that when the lens component LNSG includes the light-transparent part GLS and the second lens LNS2, an edge of the lens component LNSG away from the second air outlet 72 includes: an edge of the light-transparent part GLS away from the second air outlet 72 and an edge of the second lens LNS2 away from the second air outlet 72. When the lens component LNSG only includes the second lens LNS2 and does not include the light-transparent part GLS, the edge of the lens component LNSG away from the second air outlet 72 is the edge of the second lens LNS2 away from the second air outlet 72.

It is further noted that the light-transparent part GLS and the second lens LNS2 may each have a polygonal structure, and both have a plurality of edges. The edge of the light-transparent part GLS (or the second lens LNS2) close to the second air outlet 72 refers to an edge closest to the second air outlet 72 among edges of the light-transparent part GLS (or the second lens LNS2). The edge of the light-transparent part GLS (or the second lens LNS2) away from the second air outlet 72 refers to the edge farthest from the second air outlet 72 among edges of the light-transparent part GLS (or the second lens LNS2).

For example, the fixing member FS includes a first fixing portion FS1 and a second fixing portion FS2, the edge of the light-transmitting part GLS close to the second air outlet 72 is fixed on the first fixing portion FS1, and the edge of the second lens LNS2 close to the second air outlet 72 is fixed on the second fixing portion FS2.

The fixing manner of the first fixing portion FS1 and the second fixing portion FS2 is not limited in the embodiment of the present disclosure. For example, the fixing manner may be a clamping manner, a holding and supporting manner, or the like. For example, the first fixing portion FS1 has a first fixing groove, and at least a part of the edge of the light-transparent part GLS close to the second air outlet 72 is fixed in the first fixing groove; for example, the second fixing portion FS2 has a second fixing groove, and at least a part of the edge of the second lens LNS2 close to the second air outlet 72 is fixed in the second fixing groove.

For example, the first and second fixing grooves are both grooves having a length, width and depth, and a width direction of the first fixing groove is: a thickness direction of the light-transparent part GLS; a length direction of the first fixing groove is an extending direction of the edge of the light-transparent part GLS close to the second air outlet 72. For example, a depth direction of the first fixing groove is perpendicular to the length direction and the width direction of the first fixing groove. Similarly, a width direction of the second fixing groove is a thickness direction of the second lens LNS2; a length direction of the second fixing groove is an extending direction of the edge of the second lens LNS2 close to the second air outlet 72. For example, a depth direction of the second fixing groove is perpendicular to the length direction and the width direction of the second fixing groove.

For example, the length of the first fixing groove may be greater than or equal to the length of the edge of the light-transparent part GLS close to the second air outlet 72; the width of the first fixing groove may be equal to or approximately equal to the thickness of the light-transparent part GLS, so that the edge of the light-transparent part GLS close to the second air outlet 72 may be integrally clamped. The first fixing portion FS1 may be made of a light shielding material.

When the length of the first fixing groove is greater than or equal to the length of the edge of the light-transparent part GLS close to the second air outlet 72 and the first fixing portion FS1 is made of the light shielding material, light without being polarized by the first polarizing element POL1 can be shielded, and is prevented from being incident on the display panel PNL to affect the display effect.

For example, the length of the second fixing groove may be smaller than the length of the edge of the second lens LNS2 close to the second air outlet 72, so as to clamp a portion of the edge of the second lens LNS2 close to the second air outlet 72. For example, the number of the second fixing portions FS2 is two, and the two second fixing portions FS2 are provided at intervals and are configured to fix both ends of the edge of the second lens LNS2 close to the second air outlet 72, respectively.

When the projection device is operating, the second lens LNS2 generates higher heat at the middle of the second lens LNS2 than at other positions. Thus, the second fixing portions FS2 are disposed at two ends of the edge of the second lens LNS2 close to the second air outlet 72, so that the second fixing portions FS2 can be prevented from being deformed by the heat of the second lens LNS2.

For example, the first and second fixing portions FS1 and FS2 may have a one-piece structure.

In some embodiments, as shown in FIG. 13, the fixing portion FS further includes a limiting portion FS3 configured to limit the second mirror MR2, to ensure that the position of the second mirror MR2 in the housing is stable. The limiting portion FS3, the first fixing portion FS1 and the second fixing portions FS2 may have a one-piece structure.

For example, the limiting portion FS3 has a limiting groove, and a part of the edge of the second mirror MR2 close to the second air outlet 72 is located in the limiting groove. For example, the edge of the second mirror MR2 close to the second air outlet 72 is defined as a reference edge, and one end of the reference edge along a length direction thereof is provided with the limiting portion FS3, so as to limit one end of the reference edge; or both ends of the reference edge along the length direction thereof are provided with limiting portions FS3, so as to limit both ends of the reference edge; or the limiting portions FS3 are distributed continuously along the length direction of the reference edge. It should be noted that the limiting portions FS3 may limit the second mirror MR2 in other way.

In some embodiments, the edge of the lens component LNSG close to the second air outlet 72 and the second air outlet 72 may have a gap therebetween, to facilitate the installation of the lens component LNSG. For example, the gap between the edge of the lens component LNSG close to the second air outlet 72 and the second air outlet 72 is in a range of [3mm, 5mm]. For example, the gap between the edge of the lens component LNSG close to the second air outlet 72 and the second air outlet 72 is 3mm, or 4mm, or 5 mm.

In some embodiments, a ventilation area of the second air inlet 71 is M times the sum of the first effective discharge area S1 and the second effective discharge area S2, M is in a range of [1, 1.2]. When M =1, an air pressure of the second fan 7 is stable. Preferably, M is set in a range of (1, 1.2], so that a negative air pressure may be formed in the second fan 7, which is beneficial for pumping the air discharged through the second air outlet 72 into the second air inlet 71. For example, M is in a range of (1, 1.1], or M is in a range of [1.05, 1.15], or M is in a range of [1.1, 1.2].

The second fan 7 includes the fan housing 7a and the centrifugal fan arranged in the fan housing 7a, the second air inlet 71 is an air inlet formed in the fan housing 7a, and the ventilation area of the second air inlet 7a is the area of the air inlet.

A ventilation area of the ventilation portion 73 is K times the first effective discharge area S1, and K is in a range of [1, 1.3], so that the air discharged through the second air outlet 72 into the first subspace SP1 is pumped into the second air inlet 71. For example, K is in a range of (1, 1.1], or K is in a range of [1.05, 1.15]. Preferably, K is in a range of [1.1, 1.3], so that the ventilation area of the ventilation portion 73 is increased as much as possible in a limited region on the fan housing 7a, and the air discharged into the first subspace SP1 through the second air outlet 72 can be more smoothly pumped to the second air inlet 71. For example, K = 1.2.

It should be noted that the ventilation area of the ventilation portion 73 is a cross-sectional area of the ventilation portion 73 through which an air flow can flow. In one example, the ventilation portion 73 includes one or more ventilation holes 731 penetrating through the fan housing 7a, and each ventilation hole 731 is cylindrical, so that the ventilation area of the ventilation portion 73 is a sum of ventilation areas of all the ventilation holes 731, and a ventilation area of each ventilation hole 731 is a cross-sectional area of the ventilation hole 731 in a plane perpendicular to an axial direction thereof.

In some preferred implementations, the ventilation portion 73 includes a plurality of ventilation holes 731, each of which includes an opening facing the first subspace SP1 and an opening facing the second subspace SP2, and areas and shapes of the two openings in the same ventilation hole 731 are the same. The shape of each opening of each ventilation hole 731 is not limited, and may be rectangular, circular, triangular, trapezoidal, or other irregular shape. A shape of the second air inlet 71 may be circular, or other shape. The plurality of ventilation holes 731 of the ventilation portion 73 may be divided into two sets respectively located on both sides of the centrifugal fan. For example, each set of the ventilation holes 731 may be distributed along an arc-shaped contour of the centrifugal fan, and the two sets of the ventilation holes 731 are distributed in a manner of half-wrapping the centrifugal fan (wrapping half of the centrifugal fan).

In some embodiments, as shown in FIG. 10, the accommodating space in the housing 1 further includes a third subspace SP3, and when the first lens LNS1 is located on a side of the display panel PNL away from the second mirror MR2, at least a portion of the housing 1, the first mirror MR1, the projection lens 3, and the first lens LNS1 define the third subspace SP3; when the display panel PNL is positioned on a side of the first lens LNS1 away from the second mirror MR2, at least a portion of the housing 1, the first mirror MR1, the projection lens 3, and the display panel PNL define the third subspace SP3. The air in the third subspace SP3 may not flow.

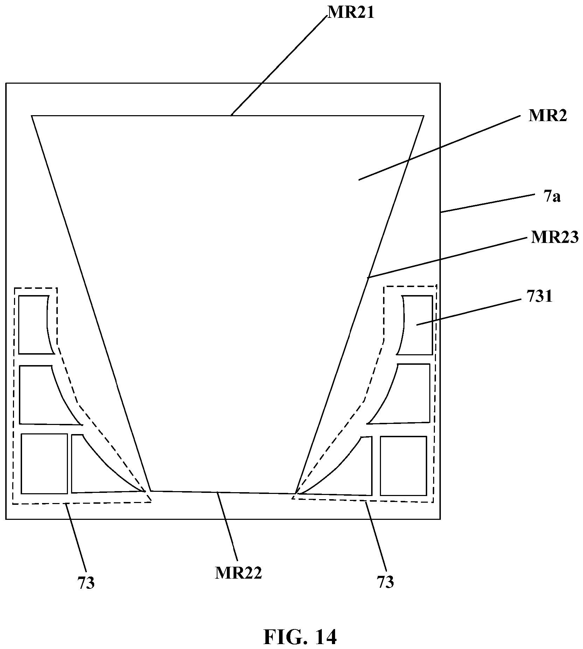

FIG. 14 is a schematic diagram of a position relationship between a second mirror and a ventilation portion according to some exemplary embodiments of the present disclosure. As shown in FIG. 14, a projection of the second mirror MR2 on the fan housing 7a does not overlap with at least a portion of the ventilation portion 73 along a direction perpendicular to a light reflecting surface of the second mirror MR2, so as to ensure that the air in the first subspace SP1 can be blown to the first inner air duct CH' through the ventilation portion 73.

In one example, the projection of the second mirror MR2 on the fan housing 7a does not overlap with a portion of the ventilation portion 73, and overlaps with another portion of the ventilation portion 73. It should be noted that in this case, the ventilation area of the ventilation portion 73 is a cross-sectional area of the portion of the ventilation portion 73 that is not blocked by the second mirror MR2 through which the air can flow.

In another example, the projection of the second mirror MR2 on the fan housing 7a does not overlap with the ventilation portion 73 at all, to ensure that the air in the first subspace SP1 can smoothly enter the first inner air duct CH'.

For example, a width of the light reflecting surface of the second mirror MR2 close to the lens component LNSG is greater than a width of the light reflecting surface away from the lens component LNSG. For example, the width of the light reflecting surface of the second mirror MR2 tends to gradually decrease as the distance from the lens component LNSG increases. For example, the width of the light reflecting surface of the second mirror MR2 decreases as the distance from the lens component LNSG increases. In this way, a space may be left for providing the ventilation portion 73.

For example, the light reflecting surface of the second mirror MR2 has a trapezoid shape, the trapezoid shape has a first bottom MR21 and a second bottom MR22 parallel to each other, and a waist MR23 connected between the first bottom MR21 and the second bottom MR22, the first bottom MR21 has a length greater than that of the second bottom MR22, the first bottom MR21 is located at a position of the first subspace SP1 close to the lens component LNSG, and the second bottom MR22 is located at a position of the second subspace SP2 away from the lens component LNSG. A projection of the waist MR23 of the trapezoid shape on the fan housing 7a is in contact with or adjacent to the ventilation portion 73 in a direction perpendicular to the light reflecting surface of the second mirror MR2.

The light reflecting surface of the second mirror MR2 allows light emitted from the light source component 2 to enter the display region of the display panel PNL, and the light reflecting surface of the second mirror MR2 is provided to have the trapezoid shape, so that the ventilation portion 73 can be bypassed without affecting the display effect.

In some embodiments, the ventilation portion 73 is distributed on both waists of the second mirror MR2, the ventilation portion 73 includes the plurality of ventilation holes 731, and each waist of the second mirror MR2 is provided with ventilation holes 731, so that the air in the first subspace flows more uniformly into the first inner air duct CH'. It should be understood that when the ventilation holes 731 are provided on each waist of the second mirror MR2, the ventilation area of the ventilation portion 73 is a sum of ventilation areas of all the ventilation holes 731 on both sides. In one example, the number of the ventilation holes 731 provided on each waist of the second mirror MR2 is constant, and the ventilation area of each ventilation hole 731 on both waists is constant. For example, four ventilation holes 731 are provided on each waist of the second mirror MR2, and the total ventilation area of the four ventilation holes 731 on each side is equal to a preset value.

It should be noted that in the projection device shown in FIG. 10, except for the structures of the second fan 7 and the second mirror MR2, and the air flow direction in the air flowing space, the rest of the structures in the projection device can refer to the projection device in FIG. 1A, and are not described again here.

In the related art, an optical axis of the projection lens of the projection device coincides with a center of a projection picture, so that a part of the screen is easily blocked and cannot be projected onto the projection screen. For example, when the projection device is placed on a carrier, the lower half of the picture may be projected onto the carrier instead of the projection screen, thereby affecting the viewing experience. To address this issue, in some embodiments of the present disclosure, a position of the optical element in the projection device is adjusted to implement off axis projection, so as to adjust a position of the projection picture. When the projection device is horizontally placed for use, compared with the related art, the position of the projection picture is lifted, and better viewing experience can be obtained.

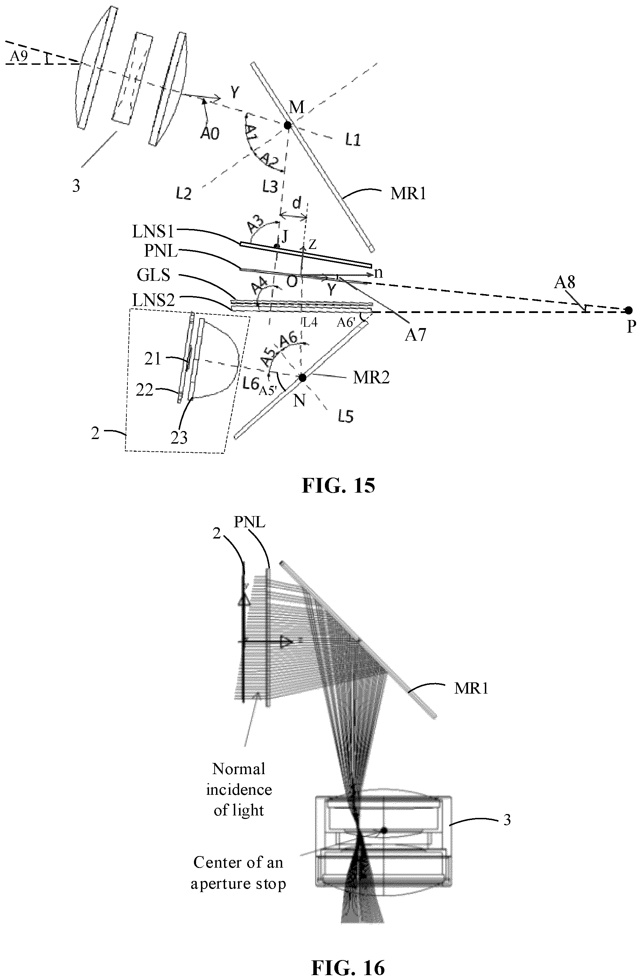

FIG. 15 is a schematic diagram of optical elements in a projection device according to some exemplary embodiments of the present disclosure. The optical elements in the projection device in the embodiments described above may be arranged according to the positions in FIG. 15. As shown in FIG. 15, in some embodiments of the present disclosure, a first intersection point J exists between an optical axis L1 or an equivalent optical axis L3 of the projection lens 3 and the display region of the display panel PNL, and a non-zero distance d exists between the first intersection point J and a center of the display region of the display panel PNL, so that an off axis projection is implemented in a "partial axis" manner, which is hereinafter referred to as a "partial axis off axis projection".

It should be noted that in an example, no light reflecting element may be disposed between the display panel PNL and the projection lens 3, so that the light emitted from the display panel PNL is emitted to the projection lens 3 without being reflected (or without being bent). In this case, the positional relationship between the projection lens 3 and the display panel PNL satisfies: the first intersection point J exists between the optical axis L1 of the projection lens 3 and the display region of the display panel PNL, and the non-zero distance d exists between the first intersection point J and the center of the display region of the display panel PNL. In another example, a light reflecting element (e.g., the first mirror MR1 as shown in FIG. 15) is disposed between the display panel PNL and the projection lens 3, and light emitted from the display panel PNL is reflected by the first mirror MR1 and enters the projection lens 3. In this case, the positional relationship between the projection lens 3 and the display panel PNL satisfies: the first intersection point J exists between the equivalent optical axis L3 of the projection lens 3 and the display region of the display panel PNL, and the non-zero distance d exists between the first intersection point J and the center of the display region of the display panel PNL. The "equivalent optical axis L3" is a mirror extension of the optical axis of the projection lens 3, and can be understood as an axis of the optical axis L1 of the projection lens 3 specularly reflected by the first mirror MR1; in other words, the optical axis L1 and the equivalent optical axis L3 of the projection lens 3 intersect with each other on the light reflecting surface of the first mirror MR1, and are axisymmetric with respect to the normal L2 of the first mirror MR1. Therefore, an angle A1 between the optical axis L1 of the projection lens 3 and the normal L2 of the first mirror MR1 is equal to an angle A2 between the equivalent optical axis L3 of the projection lens 3 and the normal L2 of the first mirror MR1; the normal L2 of the first mirror MR1 is a straight line passing through a intersection point M between the optical axis L1 of the projection lens 3 and the first mirror MR1 and perpendicular to the light reflecting surface of the first mirror MR1.

In one example, an outer contour of the display region of the display panel PNL is rectangular; referring to FIG. 15, a coordinate system is established with the display region of the display panel PNL as a reference, with a center O of the display region as the origin of the coordinate system, and with the central normal of the display region (i.e., a straight line passing through the center O and perpendicular to the display region) as the Z axis of the coordinate system; the Y axis of the coordinate system points to a first side of the outer contour of the display region from the center O of the display region and is perpendicular to the first side; the X axis of the coordinate system passes through the center O and is perpendicular to the Y axis and the Z axis, i.e. the X axis of the coordinate system points to a second side of the outer contour of the display region from the center O of the display region and is perpendicular to the second side. For example, the rectangular outer contour of the display region includes a rectangle long side and a rectangle short side. For example, the first side is a long side of the rectangle, and the second side is a short side of the rectangle.

For example, referring to FIG. 15, in the case where the first mirror MR1 is present, the Y axis is located in the same plane as the optical axis L1 of the projection lens 3.

For example, referring to FIG. 15, in the case where the first mirror MR1 is present, the optical axis L1 of the projection lens 3 is in the same plane as a line where the short side of the rectangle is located, so that the projection lens can project a landscape image (with a length greater than a height).

For example, the display panel PNL further includes a non-display region disposed around the display region.

For example, the display panel PNL further includes a bonding region located in the non-display region on the long side of the rectangular outer contour of the display region.

For example, referring to FIG. 15, in the case where the first mirror MR1 is present, the bonding region is located on a side of the display region of the display panel PNL away from the projection lens 3, or the bonding region is located on a side of the display region of the display panel PNL close to the projection lens 3, thereby facilitating arrangement of the driving circuit of the display panel PNL.

Preferably, in the case where the first mirror MR1 is present, the bonding region is located on the side of the display region of the display panel PNL away from the projection lens 3, thereby facilitating installation of the driving circuit of the display panel PNL.

In one example, a diagonal length of the display region is 4.45 inches and an aspect ratio of the display region is 16: 9.

In one example, in the case where the first mirror MR1 is provided, the equivalent optical axis L3 of the projection lens 3 is parallel to a center normal of the display region.

In one example, in the case where the first mirror MR1 is provided, the equivalent optical axis L3 of the projection lens 3 is parallel to the Z axis.

In some embodiments of the present disclosure, when the first intersection point J exists between the optical axis L1 or the equivalent optical axis L3 of the projection lens 3 and the display region of the display panel PNL, and the non-zero distance d exists between the first intersection point J and the center of the display region of the display panel PNL, a center of a picture projected onto the projection screen by the projection lens 3 deviates from the optical axis L1 or the equivalent optical axis L3 of the projection lens 3, so as to implement the off axis projection. In practical application, the non-zero distance d may be adjusted according to needs, so that a projection picture is completely projected on the projection screen, and the viewing experience is improved.

In one example, the distance d between the first intersection point J and the center of the display region of the display panel PNL is not more than 25mm, to ensure the display effect.

Preferably, d is in a range [11mm, 16.5mm]. For example, d is 11mm, or 13mm, or 14mm, or 16mm, or 16.5 mm. In this way, an off axis ratio of 50% can be achieved or approached.

Specifically, the off axis ratio is defined as follows: in the projection system, a center of the picture may be set as a point A, an intersection point between the normal of the screen (or the plane where the screen is located) passing through an optical center of the lens and the screen (or an intersection point between the normal and a plane where the screen is located) is set as a point B, and when the points A and B coincide with each other, the projection is non-off axis (the off axis ratio is 0%). When the points A and B do not coincide with each other, the off axis projection is obtained. A distance between the points A and B is referred to as an "off axis amount". In general, in practice, the off axis projection in a height direction is focused on, and the "off axis ratio" may be defined as a ratio of the "off axis amount" to a half height of the picture.

In one example, as described above, the projection device includes: the first lens LNS1 and the second lens LNS2, the first lens LNS1 may be a convex lens. In some embodiments, the first lens LNS1 may be a fresnel lens or an aspherical mirror, preferably the fresnel lens. The second lens LNS2 is a convex lens. In some embodiments, second lens LNS2 may be a fresnel lens or an aspherical mirror, preferably the fresnel lens.

FIG. 16 is a schematic diagram of an optical path when a display surface of a display panel is parallel to a plane where a second lens is located. As shown in FIG. 16, when the partial axis off axis projection is implemented, if the extending surface of the display panel PNL is parallel to the plane where the second lens LNS2 is located, light irradiated to the projection lens 3 cannot converge at a center of an aperture stop, that is, the center of the projection lens 3, so that the luminous flux is small, and thus the vignetting problem occurs, and the display uniformity is poor. To solve this problem, in the embodiment of the present disclosure, as shown in FIG. 15, the extending surface of the display panel PNL and the plane where the second lens LNS2 is located intersects at a second intersection point P, and a first angle A8 exists between the extending surface of the display panel PNL and the plane where the second lens LNS2 is located.

It should be noted that the extending surface of the display panel PNL is an extending surface of a display surface of the display panel PNL.

It should be noted that the plane where the second lens LNS2 is located can be understood as a plane passing through the optical center of the second lens and perpendicular to the optical axis of the second lens. When the second lens LNS2 is a fresnel lens, the plane where the second lens LNS2 is located is parallel to an extending plane of the second lens LNS2.

The first angle A8 is in a range of (0, 10°], so that a better lighting effect can be achieved. Preferably, the equivalent optical axis L3 of the projection lens 3 is perpendicular to the display surface of the display panel PNL, A8=A4-90°, where A4 is an angle between a portion of the second lens LNS2 away from the second intersection point P and the equivalent optical axis L3 of the projection lens 3.

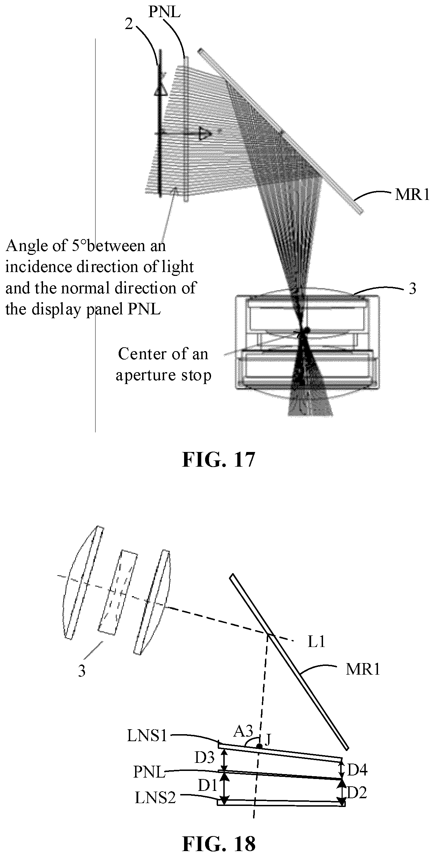

FIG. 17 is a schematic diagram of an object-space telecentric optical path implemented in a projection device according to some exemplary embodiments of the present disclosure. As shown in FIG. 17, when the first angle A8 exists between the extending surface of the display panel PNL and the plane where the second lens LNS2 is located, it is equivalent to that light is obliquely, not perpendicularly, incident on the display panel PNL, so that light irradiated to the projection lens 3 can approach or even pass through the center of the projection lens 3, and an object-space telecentric optical path is implemented.

Preferably, the first angle A8 is in a range of (0, 7°]. Further preferably, referring to FIGS. 15 and 17, the first angle A8 may be 5°, to enable light to be converged at the center of the projection lens 3, thereby maximizing the luminous flux of the projection lens 3 and improving display uniformity.

FIG. 18 is a schematic diagram of a display panel, a second lens, a first mirror, and a projection lens in the projection device shown in FIG. 15. In combination with

FIGS. 15 and 18, in some embodiments, a distance D1 between a portion of the display panel PNL on a side of the first intersection point J and the plane where the second lens LNS2 is located is greater than a distance D2 between a portion of the display panel PNL on a side away from the first intersection point J with respect to the center of the display region of the display panel PNL and the plane where the second lens LNS2 is located, so that the light is obliquely incident on the display panel PNL, and a convergence point of the light irradiated to the projection lens 3 is located at or close to the center of the projection lens 3.

In some embodiments, as shown in FIG. 15, the projection device includes the first mirror MR1 configured to reflect the light emitted from the display panel PNL into the projection lens 3. The first mirror MR1 may be a planar mirror. The optical axis L1 of the projection lens 3 intersects with the equivalent optical axis L3 at a point on the light reflecting surface of the first mirror MR1, the normal L2 of the first mirror MR1 passes through the point, and the optical axis L1 and the equivalent optical axis L3 of the projection lens 3 are distributed axisymmetrically with respect to the normal L2 of the first mirror MR1. An angle between the optical axis L1 of the projection lens 3 and the normal L2 of the first mirror MR1 is denoted as A1, and an angle between the equivalent optical axis L3 of the projection lens 3 and the normal L2 of the first mirror MR1 is denoted as A2, where A1=A2.

In some embodiments, referring to FIG. 15, the optical axis L1 of the projection lens 3 is parallel to a reference plane n. Preferably, the equivalent optical axis L3 of the projection lens 3 is parallel to the central normal of the display region of the display panel PNL, so as to obtain a better display effect.

It should be noted that the reference plane n may be understood as a placement plane or a suspension plane of the projection device when the projection device is in normal operation. It can be understood that the placement mode of the projection device in normal operation can be obviously indicated on the projection device or a product specification thereof. For example, a user may easily find the most recommended placement mode from the product, that is, the placement mode of the projection device in normal operation; for example, a support surface and/or a foot pad may be provided on a side of the projection device, to guide the user to place the projection device on the reference plane; for example, a suspension member may be provided on a side of the projection device, to guide a user to suspend and fix the projection device on the reference plane (e.g., a ceiling). In some embodiments, referring to FIG. 6A, the reference plane n is parallel to the ground plane GND; under such a situation, preferably, the projection screen is perpendicular to the ground plane GND, so as to achieve a better display effect.

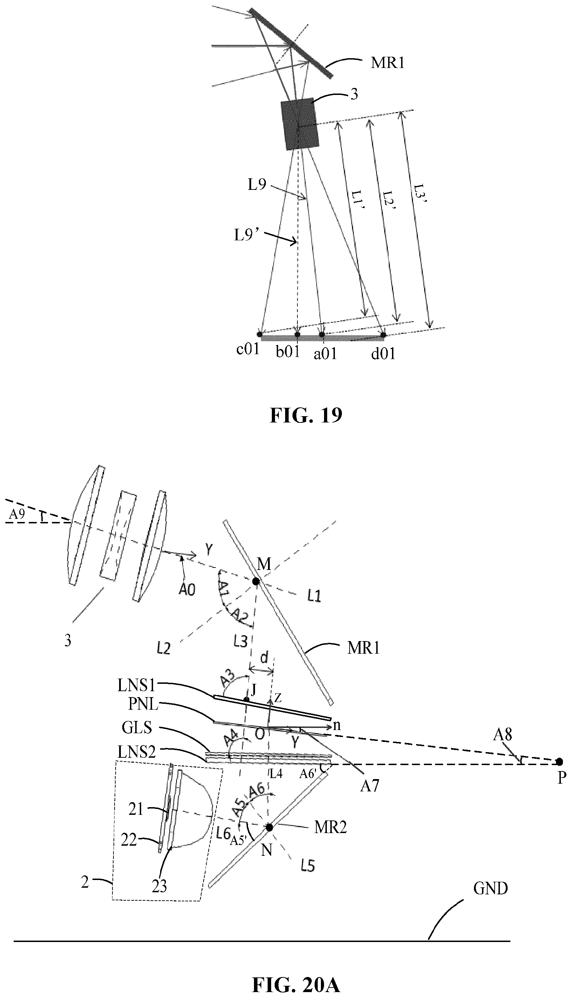

In some embodiments, an angle exists between the optical axis L1 of the projection device and the reference plane n, so that the off axis projection may be implemented by rotating an angle, which is hereinafter referred to as "an off axis projection by rotating an angle". FIG. 19 is a schematic diagram of a principle of an off axis projection by rotating an angle. The off axis projection by rotating an angle may be understood that the optical axis of the projection lens 3 is no longer perpendicular to an imaging plane (that is, a plane where the projection screen is located). As shown in FIG. 19, the optical axis of the projection lens 3 extends along a dotted line L9' in the initial state; and the optical axis of the projection lens 3 extends along a line L9 by rotation. In this way, a position of the projected picture can be adjusted.

In some embodiments of the present disclosure, only the off axis by rotating an angle may be employed to achieve the off axis effect.

In some embodiments of the present disclosure, the partial axis off axis projection and the off axis projection by rotating an angle may be employed simultaneously, which may obtain a greater off axis ratio.

In some embodiments, as shown in FIG. 15, the optical axis L1 of the projection lens 3 has an elevation angle A9 with respect to the reference plane n in a projected light outgoing direction. The optical axis L1 of the projection lens 3 has the elevation angle with respect to the reference plane n in the projected light outgoing direction, which can be understood that when the projection device is placed on the reference plane n, the light are emitted obliquely upward along the optical axis L1 of the projection lens 3 with respect to the reference plane. The elevation angle A9 may be determined based on the off axis effect actually required. The greater the elevation angle A9 is, the higher the off axis ratio is. In some embodiments, the elevation angle A9 is in a range of (0, 15°], to achieve a good image quality. Preferably, the equivalent optical axis L3 of the projection lens 3 is parallel to the central normal of the display region of the display panel PNL, so that a better imaging effect can be obtained.

The elevation angle A9 is preferably in a range of (0, 10°], to achieve a better image quality. For example, the elevation angle A9 is 5°, or 6°, or 7°, or 8°, or 9°, or 10°.

In practical applications, the projection device may be placed on the ground plane GND, so that the light emitted along the optical axis L1 of the projection lens 3 is obliquely irradiated to the projection screen upward with respect to the ground plane GND. For another example, the projection device may be suspended upside down (with respect to the case where the projection device is placed on the ground plane GND) on a supporting frame (or the ceiling), so that the light emitted along the optical axis L1 of the projection lens 3 is obliquely irradiated to the projection screen downward with respect to the reference plane. For example, the projection screen is arranged perpendicular to the ground plane GND.

When an angle exists between the optical axis L1 of the projection lens 3 and the reference plane n, the off axis by rotating an angle may be realized. However, as shown in FIG. 19, when the off axis by rotating an angle is realized, on the projection screen, image distances of the points A, B are close to each, and are approximately L2'; an image distance of the point C is L1'; an image distance of the point D is L3'; therefore, a lateral magnification of an actual image point is different, and the keystone-type distortion occurs. In order to ensure the display effect of the projected picture, an optical keystone-type distortion correction is required. The object of the keystone-type distortion correction is that the lateral magnification of each point on the display panel is the same, and when the image distances of different points are different, a ratio of the image distance to an object distance of each point may be constant by changing the object distance. An object plane of the projection lens 3 is a virtual image of the display panel PNL with respect to the first lens LNS1, which is a virtual object for the projection lens 3. By rotating the first lens LNS1, the virtual image of the display panel PNL may be rotated, that is, the virtual object of the projection lens 3 is rotated, so that the ratio of the image distance to the object distance of each point on the display panel may be adjusted, and the problem of keystone-type distortion can be improved.

In order to realize the keystone-type distortion correction, as shown in FIGS. 15 and 18, in some embodiments of the present disclosure, an angle A3 exists between the equivalent optical axis L3 of the projection lens 3 and the plane where the first lens LNS1 is located, where A3 may be in a range of [75°, 90°], and a distance D3 between an end of the first lens LNS1 close to the projection lens 3 and the display panel PNL is greater than a distance D4 between an end of the plane where the first lens LNS1 is located away from the projection lens 3 and the display panel PNL, which is equivalent to the case where the first lens LNS1 is rotated, so that the virtual image of the display panel PNL is rotated, thereby improving the problem of keystone-type distortion.

It should be noted that the plane where the first lens LNS1 is located can be understood as a plane passing through the optical center of the first lens LNS1 and perpendicular to the optical axis of the first lens LNS1. When the first lens LNS1 is a fresnel lens, the plane where the first lens LNS1 is located is parallel to an extending plane of the first lens LNS1.

In one example, A3 may be set to be in a range of [80°, 90°), thereby further improving the problem of keystone-type distortion.

Preferably, A3=90°-A9, so that the problem of keystone-type distortion can be improved to a greater extent. For example, A9=A0+A7=5°, A3=85°.

In some embodiments, the extending surface of the display panel PNL is parallel to the reference plane n.

In some embodiments, a second angle A7 exists between the extending surface of the display panel PNL and the reference plane n, and is in a range of (0, 30°]. Preferably, a height of an end of the display panel PNL close to the projection lens 3 with respect to the reference plane n is greater than a height of an end of the display panel PNL away from the projection lens 3 with respect to the reference plane n. In this way, the arrangement of the optical elements in the projection device is more compact, which is favorable for reducing the volume of the projection device.

In some embodiments, an angle between the equivalent optical axis L3 of the projection lens 3 and the normal of the first mirror MR1 is in a range of [30°, 60°]. Preferably, the angle between the equivalent optical axis L3 of the projection lens 3 and the normal of the first mirror MR1 is [35°, 50°], which is favorable for reducing the volume of the projection device.

An angle between the optical axis L1 of the projection lens 3 and the normal of the first mirror MR1 is denoted as A1, and the angle between the equivalent optical axis L3 of the projection lens 3 and the normal of the first mirror MR1 is denoted as A2, where A1=A2; an angle between the optical axis L1 of the projection lens 3 and the extending surface of the display panel PNL is denoted as a third angle A0. It is defined that A0 is a positive value when the projection lens 3 is in a nose-up pitch state (i.e., the state shown in FIG. 15) with respect to the extending surface of the display panel PNL in the projected light outgoing direction, that is, when an inclination degree of the optical axis of the projection lens 3 with respect to the reference plane n is greater than that of the extending surface of the display panel PNL with respect to the reference plane. It is defined that A0 is a negative value when the projection lens 3 is in a nose-down pitch state (i.e., a state in which the left end of the projection lens 3 in FIG. 15 is adjusted to be lower than the right end) with respect to the reference plane n in the projected light outgoing direction, that is, when an inclination degree of the optical axis of the projection lens 3 with respect to the reference plane n is smaller than that of the extending surface of the display panel PNL with respect to the reference plane n; the elevation angle A9= A0+A7. After the elevation angle A9 is determined as needed, A7 may be set to a larger value, so that A0 is smaller. Since A1+A2=A0+90°, when A0 is smaller, A1 and A2 are also smaller (which is equivalent to rotating the first lens LNS1, the light source component 2 and the elements therebetween clockwise around A point M as a whole), which is beneficial for reducing the volume of the projection device.

In one example, the Y axis is located in the same plane as the optical axis L1 of the projection lens 3.

In some embodiments, after the elevation angle A9 is determined, the second angle A7 may be set to a larger value not exceeding 30°. When the inclination degree of the optical axis L1 of the projection lens 3 with respect to the reference plane n is larger than that of the extending plane of the display panel PNL with respect to the reference plane n, the third angle A0 is defined as a positive value and is in a range of (0, 30°]; when the inclination degree of the optical axis L1 of the projection lens 3 with respect to the reference plane n is smaller than that of the extending plane of the display panel PNL with respect to the reference plane n, the third angle A0 is defined as a negative value and is in a range of [-30°, 0). Accordingly, A1 and A2 are both in a range of [30°, 60°], so that the layout for the elements in the projection device is optimized, and the volume of the projection device is reduced.

Preferably, the second angle A7 may be set to a larger value not exceeding 30°, for example, the second angle A7 is in a range of (0, 20°]. When the inclination degree of the optical axis L1 of the projection lens 3 with respect to the reference plane n is larger than that of the extending plane of the display panel PNL with respect to the reference plane n, the third angle A0 is in a range of (0, 10°], and accordingly, A1, A2 are both in a range of (45°, 50°]. When the inclination degree of the optical axis L1 of the projection lens 3 with respect to the reference plane n is smaller than that of the extending plane of the display panel PNL with respect to the reference plane n, the third angle A0 is in a range of [-20°, 0), and accordingly, A1, A2 are both in a range of [35°, 45°).

In one example, the elevation angle of the projection lens 3 is set to 5°, thereby reducing the problem of abnormal screen due to an excessive off axis ratio of the off axis by rotating an angle. At this time, A0+A7=5°. In order to reduce the volume of the projection device, A7 is set to 18°, A0 is set to -13°, and at this time, A1=A2=38.5°.

In some embodiments, as shown in FIG. 15, the light source component 2 includes the condenser lens 23, and the condenser lens 23 is disposed on the light outgoing side of the light emitting elements 21, to converge the light emitted from the light emitting element 21. The condenser lens 23 is, for example, a plano-convex lens.

In some embodiments, an optical axis of the condenser lens 23 is coaxial or nearly coaxial with a central axis L6 of the light emitting element 21. Specifically, the optical axis of the condenser lens 23 is parallel to the central axis L6 of the light emitting element 21, and a distance between the optical axis of the condenser lens 23 and the central axis L6 of the light emitting element 21 is in a range of [0, 2mm]. The central axis L6 of the light emitting element 21 is a straight line passing through a center of the light outgoing surface of the light emitting element 21 and perpendicular to the light outgoing surface.

In some embodiments, as shown in FIG. 15, the projection device includes the second mirror MR2 used for reflecting the light emitted from the light emitting element 21 into the display panel PNL. Specifically, the light emitted from the light emitting element 21 is firstly converged by the condenser lens 23 and then emitted to the second mirror MR2, reflected by the second mirror MR2 and irradiated to the second lens LNS2, collimated by the second lens LNS2 and then emitted to the display panel PNL.

In some embodiments, an equivalent optical axis of the light emitting element 21 may be defined as follows: a central axis and the equivalent optical axis of the light emitting element 21 intersect with each other at a point on the light reflecting surface of the second mirror MR2, the normal of the second mirror MR2 passes through the point, and the central axis and the equivalent optical axis of the light emitting element 21 are distributed axisymmetrically with respect to the normal of the second mirror MR2. An angle A50 exists between the central axis of the light emitting element and the normal of the second mirror MR2; an angle A60 exists between the equivalent optical axis of the light emitting element 21 and the normal of the second mirror MR2; A50=A60.

In some embodiments, A50 is in a range of [35°, 55°], for reducing the overall volume of the projection device. Preferably, A50 is in a range of [35°, 55°].

In some embodiments, the central axis of the light emitting element 21 is perpendicular to the plane where the second lens LNS2 is located, which is beneficial to reduce the overall volume of the projection device and reduce the generated stray light.

In some embodiments, the equivalent optical axis of the light emitting element 21 passes through the center of the display region of the display panel PNL, or approximately passes through the center of the display region of the display panel PNL. Specifically, a distance between the equivalent optical axis of the light emitting element 21 and the center of the display region of the display panel PNL is in a range of [0, 5mm], so that the center brightness of the display panel PNL is the highest, thereby improving the display effect.

In some embodiments, the light source component 2 includes the condenser lens 23, as shown in FIG. 15, an equivalent optical axis L4 of the condenser lens 23 may be defined as follows: an optical axis L6 and the equivalent optical axis L4 of the condenser lens 23 intersect with each other at a point on the light reflecting surface of the second mirror MR2, the normal L4 of the second mirror MR2 passes through the point, and the optical axis L6 and the equivalent optical axis L4 of the condenser lens 23 are distributed axisymmetrically with respect to the normal L4 of the second mirror MR2. An angle A5 exists between the optical axis L6 of the condenser lens 23 and the normal L5 of the second mirror MR2; an angle A6 exists between an equivalent optical axis L4 of the condenser lens 23 and a normal L5 of the second mirror MR2; A5=A6.

In some embodiments, A5 is in a range of [35°, 55°] for reducing the overall volume of the projection device. Preferably, A5 is in a range of [35°, 55°].

In one specific example of the present disclosure, the optical axis L1 of the projection lens 3, the extending plane of the display panel PNL are both parallel to the reference plane n; A8=5°; A1, A2 are both 45°; A3 is 90°; A50=A60=41°; L3 is perpendicular to the display surface of the display panel PNL; d =13.85mm, and thus, a satisfactory display effect can be achieved.

Referring to FIG. 15, the optical axis L6 of the condenser lens 23 intersects the second mirror MR2 at a point N; the normal of the second mirror MR2 is a straight line which passes through the point N and is perpendicular to the light reflecting surface of the second mirror MR2; the equivalent optical axis of the condenser lens 23 is a straight line with respect to which L6 and L5 are axisymmetric with each other.

In some embodiments, an angle A6' exists between the light reflecting surface of the second mirror MR2 and the plane where the second lens LNS2 is located. Preferably, A5=A6=A6' and thus, the equivalent optical axis of the condenser lens 23 is perpendicular to the plane where the second lens LNS2 is located, which is beneficial to reducing the overall volume of the projection device and reducing the generated stray light.

For example, A6' is in a range of [35°, 55°], for reducing the overall volume of the projection device and reducing the generated stray light. Preferably, A6' is in a range of [35°, 45°]. For example, A6' is 35°, or 40°, or 41°, or 45°.

In some examples, an angle A5' exists between the optical axis of the condenser lens 23 and the light reflecting surface of the second mirror MR2, and A5' =90° - A5, so that the sum of A5' and A6' is 90°.

In some embodiments, the equivalent optical axis L4 of the condenser lens 23 passes through the center of the display region of the display panel PNL, or approximately passes through the center of the display region of the display panel PNL. Specifically, A distance between the equivalent optical axis L4 of the condenser lens 23 and the center of the display region of the display panel PNL is in a range of [0, 5 mm], so that the center brightness of the display panel PNL is the highest, thereby improving the display effect.

In one specific example of the present disclosure, the optical axis L1 of the projection lens 3, the extending plane of the display panel PNL are both parallel to the reference plane n; A8=5°; A1, A2 are both 45°; A3 is 90°; A5=A6=41°; L3 is perpendicular to the display surface of the display panel PNL; d =13.85mm, and thus, a satisfactory display effect can be achieved.

In some embodiments, the L1, L3, L4, L6 and the Y axis are all in the same plane, so that a satisfactory display effect can be achieved.

In some embodiments, as shown in FIG. 15, the second lens LNS2 is located on a side of the light-transparent part GLS away from the display panel PNL, and the second lens LNS2 is located on a side of the first polarizing element away from the display panel PNL.

In some embodiments, a shape of the light-transparent part GLS and a shape of the second lens LNS2 may be the same as a shape of the display panel PNL, for example, both are rectangular shapes. A size of the light-transparent part may be the same as that of the second lens LNS2. The optical axis of the second lens LNS2 passes through the center of the light transmitting portion, or a distance between the optical axis of the second lens LNS2 and the center of the light transmitting portion is sufficiently small. Specifically, the distance between the optical axis of the second lens LNS2 and the center of the light transmitting portion GLS is in a range of [0, 10mm].

It should be noted that the relative position relationship (including the relative distance and the angle) among the optical elements may be determined according to the above present disclosure, and the relative position relationship among the optical elements is also within the scope of the present disclosure.

Referring to FIG. 20A, the reference plane n is parallel to the ground plane GND, and the projection device is a vertical projection device.

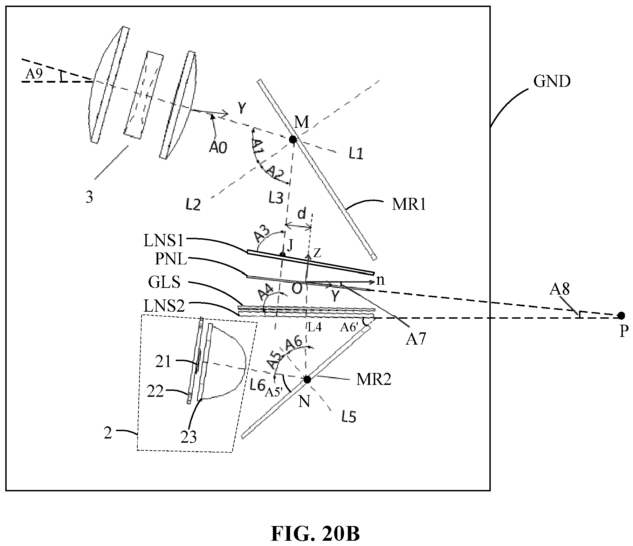

In some embodiments, an angle may also exist between the reference plane n and the ground plane GND. Referring to FIG. 20B, the reference plane n is perpendicular to the ground plane GND, and the projection device is a horizontal projection device. It is understood that when the projection device is changed from the vertical projection device to the horizontal projection device, the relative positional relationship among the optical elements is not changed, and therefore, the horizontal projection device based on the concept of the present disclosure is also within the scope of the present disclosure.

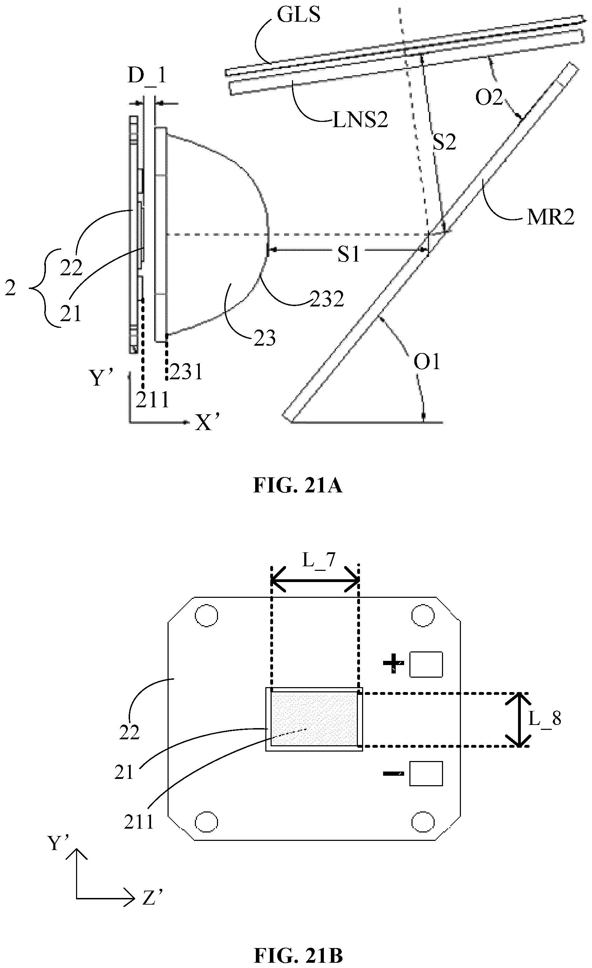

FIG. 21A is a schematic diagram of a partial optical path of a projection device according to some exemplary embodiments of the present disclosure. FIG. 21B is a front view of a light emitting element and its base of a projection device according to some exemplary embodiments of the present disclosure. Referring to FIGS. 21A and 21B, the light source component 2 includes the light emitting element 21 and the condenser lens 23, wherein the light emitting element 21 includes a light emitting region 211, and the light emitting region 211 is an effective light emitting region of the light emitting element. Referring to FIG. 21B, the light emitting element 21 includes the light emitting region 211. For example, the light emitting element 21 includes only one light emitting chip having a light emitting boundary that defines the light emitting region 211. For example, the light emitting element 21 includes a plurality of light emitting chips, and light emitting boundaries of the plurality of light emitting chips collectively have an outer contour, which defines the light emitting region 211. For example, the light emitting element 21 includes the plurality of light emitting chips arranged in a rectangular array, so that the light emitting region of the light emitting element 21 is a rectangular contour collectively formed by the light emitting boundaries of the plurality of light emitting chips.

The condenser lens 23 is disposed on the light outgoing side of the light emitting element 21, and is configured to converge or shape the light emitted from the light emitting element 21. The light emitted from the light emitting element 21 is converged or shaped by the condenser lens 23, enters the projection lens 3 through the display panel, and is emitted out of the projection lens. In addition, as shown in FIG. 21B, the light source component 2 may further include the light emitting element base 22 on which the light emitting element 21 is positioned.

For example, as shown in FIG. 21B, the light emitting region 211 includes a first extending direction (e.g., a Z' direction in FIG. 21B) and a second extending direction (e.g., a Y' direction in FIG. 21B) perpendicular to each other, and a ratio of a maximum length L_7 of the light emitting region 211 in the first extending direction to a maximum width L_8 of the light emitting region 211 in the second extending direction is a first aspect ratio, and the first aspect ratio is greater than or equal to an aspect ratio of the display region of the display panel. It should be noted that the first aspect ratio is the ratio of the maximum sizes of the contour of the light emitting region 211 in two directions (i.e., the first extending direction and the second extending direction) perpendicular to each other. The aspect ratio of the display region of the display panel is a ratio of sizes of the contour of the display region in two directions perpendicular to each other (e.g. a width and a height of an image generated by the display region, the width divided by the height is equal to the aspect ratio).

In the embodiment, the first aspect ratio is greater than or equal to the aspect ratio of the display region of the display panel, which is favorable for improving the utilization rate of light energy. On the basis, the light emitted from the light emitting element 21 is converged or shaped by using the condenser lens, so that the light irradiated to the display region of the display panel is relatively collimated and uniform, and the imaging uniformity can be improved.

In some optional embodiments, a ratio of the first aspect ratio to the aspect ratio of the display region of the display panel is greater than 1 and less than 1.2. With the ratio in such the range, the utilization rate of the light energy can be improved. Further preferably, the ratio of the first aspect ratio to the aspect ratio of the display region of the display panel is greater than 1 and less than 1.15. With the ratio in such the range, the effect of improving the utilization rate of the light energy is best.

In some optional embodiments, the shape of the display region of the display panel PLN is a rectangle, and correspondingly, the aspect ratio of the display region of the display panel is a ratio of a length of a long side to a length of a short side of the rectangle. The contour of the light emitting region 211 may be a rectangle. For example, as shown in FIG. 21B, a length of a long side of the rectangle is the maximum length L_7 in the first extending direction; a length of a short side of the rectangle is the maximum width L_8 in the second extending direction, i.e. the first aspect ratio is a ratio of the length of the long side to the length of the short side of the rectangle. Optionally, four corners of the rectangular contour of the light emitting region 211 are rounded corners, and an arc corresponding to each rounded corner smoothly transitions between the corresponding long side and the short side. In another optional embodiment, the contour of the light emitting region 211 may be an ellipse, and a length of a major axis of the ellipse is the maximum length in the first extending direction; a length of a minor axis of the ellipse is the maximum width in the second extending direction, i.e. the first aspect ratio is the ratio of the length of the major axis to the length of the minor axis of the ellipse. Alternatively, in practical applications, the contour of the light emitting region may also be circular, i.e., the first aspect ratio is 1.

In some optional embodiments, an extending direction of the long side of the display panel is the same as or substantially the same as the first extending direction, so that it can be ensured that the display panel has a good picture uniformity in the long side direction. The expression "substantially the same" may be understood to mean that a deviation between the two extending directions is in a range within 10°.

In some optional embodiments, the light emitting region 211 has the rectangular contour with the length of the long side in a range of 10mm to 15mm, preferably 13.6mm ± 0.2mm, and the length of the short side in a range of 6mm to 12mm, preferably 8.9mm ± 0.2mm; alternatively, the contour of the light emitting region is the ellipse with the length of the major axis in a range of 10mm to 15mm and the length of the minor axis in a range of 6mm to 12 mm. The sizes of the contour of the light emitting region in the above range is correspondingly adopted according to the shape of the contour of the light emitting region, so that the better utilization rate of the light energy and the imaging uniformity can be obtained.

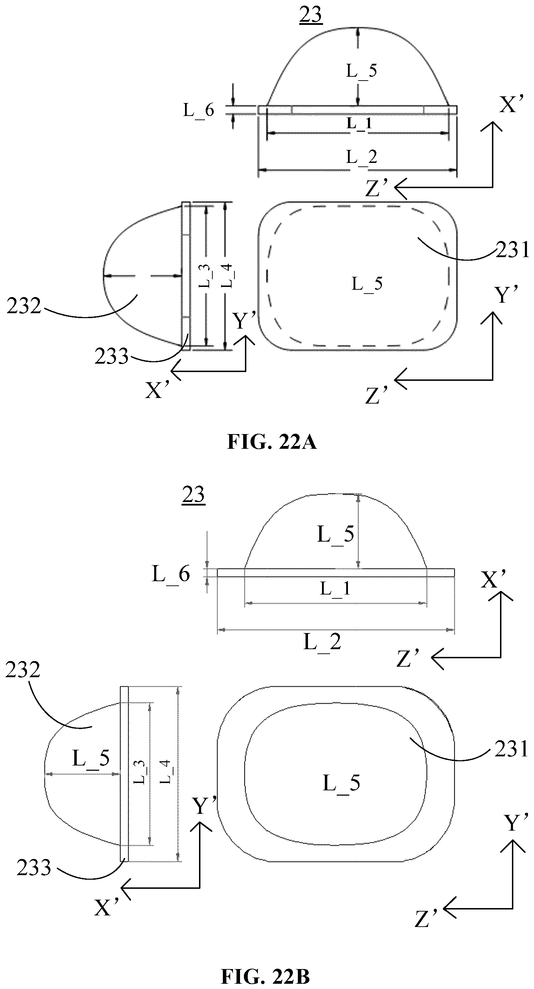

FIG. 22A is a three-view diagram of a condenser lens of a projection device according to some exemplary embodiments of the present disclosure. FIG. 22B is another three-view diagram of a condenser lens of a projection device according to some exemplary embodiments of the present disclosure. In some optional embodiments, referring to FIGS. 22A and 22B, the condenser lens 23 includes a plano-convex lens having a lens plane 231 and a lens convex surface 232 facing away from each other; the lens plane 231 and the light outgoing side of the light emitting element 21 are opposite to each other and are arranged at intervals; the lens plane 231 includes a third extending direction (e.g., the Z' direction in FIGS. 22A and 22B) and a fourth extending direction (e.g., the Y' direction in FIGS. 22A and 22B) perpendicular to each other; the third extending direction is parallel to the first extending direction (for example, the Z' direction in FIG. 21B), and the fourth extending direction is parallel to the second extending direction (for example, the Y' direction in FIG. 21B); a ratio of the maximum length L_1 of the lens plane 231 in the third extending direction to the maximum length of the light emitting region in the first extending direction is in a range of 2.5 to 3.5, and a ratio of the maximum width L_3 of the lens plane 231 in the fourth extending direction to the maximum width of the light emitting region in the second extending direction is in a range of 3 to 4. The plano-convex lens is used as an intermediate medium on a light propagation path, and sizes of the contour of the plano-convex lens in the directions (i.e., the third extending direction and the fourth extending direction) of the lens plane 231 perpendicular to each other should be larger than the sizes of the contour of the light emitting region in the corresponding directions. Meanwhile, a relatively ideal lens surface shape can be obtained, so that the collimation degree of light irradiated to the display region of the display panel can be improved, and the utilization rate of the light energy and the imaging uniformity can be further improved. In a preferred embodiment, the ratio of the maximum length L_1 of the lens plane 231 in the third extending direction to the maximum length of the light emitting region in the first extending direction is 3.3, and the ratio of the maximum width L_3 of the lens plane 231 in the fourth extending direction to the maximum width of the light emitting region in the second extending direction is 3.8; in another preferred embodiment, the ratio of the maximum length L_1 of the lens plane 231 in the third extending direction to the maximum length of the light emitting region in the first extending direction is 2.7, and the ratio of the maximum width L_3 of the lens plane 231 in the fourth extending direction to the maximum width of the light emitting region in the second extending direction is 3.2. Thus, a more optimized display effect can be achieved.

It should be noted that in practical applications, the condenser lens 23 is not limited to the plano-convex lens, and may use other lens structures.

In some optional embodiments, referring to FIG. 22A, a shape of the lens plane 231 is a rectangle, and a length of a long side of the rectangle is the maximum length L_1 of the lens plane 231 in the third extending direction; a length of a short side of the rectangle is the maximum width L_3 of the lens plane 231 in the fourth extending direction. Alternatively, referring to FIG. 22B, the shape of the lens plane 231 may be an ellipse, and a length of a major axis of the ellipse is the maximum length L_1 of the lens plane 231 in the third extending direction; a length of a minor axis of the ellipse is the maximum width L_3 of the lens plane 231 in the fourth extending direction.

**In** some optional embodiments, the maximum length L_1 of the lens plane 231 in the third extending direction is in a range of 36mm to 45mm, and the maximum width L3 of the lens plane 231 in the fourth extending direction is in a range of 28mm to 35 mm; the maximum thickness L_5 of the plano-convex lens is in a range of 15mm to 20 mm. Preferably, the maximum length L_1 of the lens plane 231 in the third extending direction is in a range of 43mm to 44mm, and the maximum width L_3 of the lens plane 231 in the fourth extending direction is in a range of 33mm to 34 mm; the maximum thickness L_5 of the plano-convex lens is in a range of 17mm to 19 mm. Alternatively, the maximum length L_1 of the lens plane 231 in the third extending direction is in a range of 36.5mm to 38mm, and the maximum width L_3 of the lens plane 231 in the fourth extending direction is in a range of 28.5mm to 30 mm; the maximum thickness L_5 of the plano-convex lens is in a range of 15mm to 16 mm.

The sizes of the contour of the lens plane 231 are in the above range, so that the collimation degree of light irradiated to the display region of the display panel can be improved, the utilization rate of the light energy and the imaging uniformity can be further improved.

In some optional embodiments, as shown in FIG. 21A, a distance D_1 between the light emitting region and the lens plane 231 is in a range of 1.5mm to 4 mm. The distance D_1 between the light emitting region and the lens plane 231 should not be too large, otherwise the utilization rate of the light energy is low, thereby affecting the imaging brightness; and the distance D_1 should not be too small, otherwise light spots are generated on the display region of the display panel, and corners of the display region are dark, thereby affecting the imaging uniformity, and even causing the problem of dark corners. Based on this, the distance D_1 between the light emitting region and the lens plane 231 is in the above range, the above defects can be avoided.

In other optional embodiments, as shown in FIGS. 22A and 22B, the condenser lens 23 further includes a lens chassis 233 on a side of the plano-convex lens close to the light emitting element 21, the lens chassis 233 is disposed in contact with the plano-convex lens, to mount and fix the plano-convex lens; and a distance between the light emitting region and the lens chassis 233 is in a range of 1.5mm to 4mm, so that the light utilization efficiency and the display brightness uniformity are better. Optionally, a surface of the lens chassis 233 away from the light emitting region is flush with the lens plane for ease of manufacturing and for more robust assembly. Optionally, an orthographic projection of the plano-convex lens on an extending plane of the lens chassis 233 is located inside the lens chassis 233.

In some optional embodiments, in consideration of the contour size of the plano-convex lens, the processing feasibility, and the structural design requirement of the projection device and other factors, the maximum length L_2 of the lens chassis 233 in the third extending direction is in a range of 45mm to 50 mm; the maximum width L_4 of the lens chassis 233 in the fourth extending direction is in a range of 34mm to 38 mm; a thickness L_6 of the lens chassis 233 is in a range of 1.2mm to 3 mm. Preferably, the maximum length L_2 of the lens chassis 233 in the third extending direction is in a range of 47mm to 49 mm; the maximum width L_4 of the lens chassis 233 in the fourth extending direction is in a range of 35mm to 37 mm; the thickness L_6 of the lens chassis 233 is in a range of 1.6mm to 2.2 mm.

In an optional embodiment, an outer contour of the lens chassis 233 is expanded by a width in a range of 0.5mm to 3mm from an outer contour of an orthographic projection of the plano-convex lens on the lens chassis 233, which facilitates to form the plano-convex lens in a draft way. Preferably, the outer contour of the lens chassis 233 is expanded by a width in a range of 1mm to 2mm from the outer contour of the orthographic projection of the plano-convex lens on the lens chassis 233, so that a volume occupied by the lens chassis 233 is reduced while the processing difficulty is reduced and the assembly is more stable.

In some optional embodiments, in consideration of the contour size of the plano-convex lens, the processing feasibility, and the structural design requirement of the projection device and other factors, the lens chassis 233 has a rectangular contour, and four corners of the rectangular contour each include one or more arc segments, and a circular arc radius R of each arc segment is in a range of 4mm to 18mm, so as to facilitate the processing and make the assembly more stable.

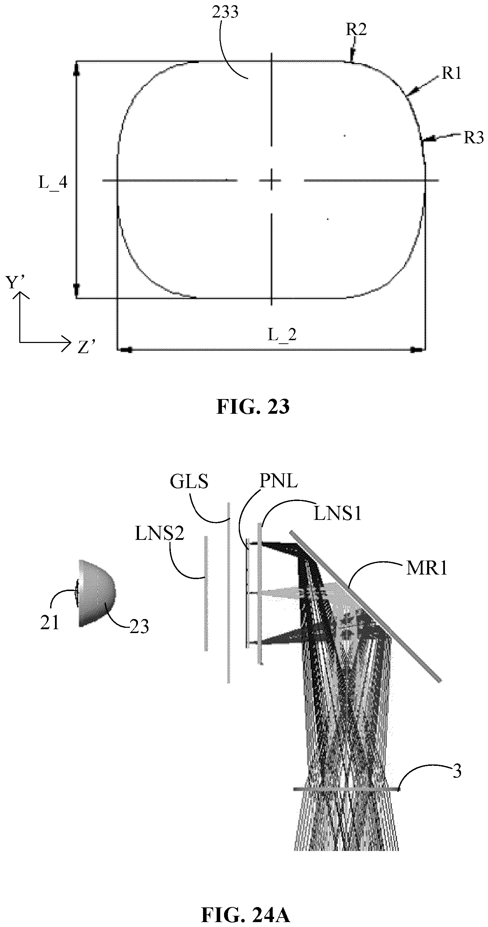

FIG. 23 is another contour view of a lens chassis of a projection device according to some exemplary embodiments of the present disclosure. In some optional embodiments, as shown in FIG. 23, a first transition rounded corner (corresponding to a circular arc radius R2) and a second transition rounded corner (corresponding to a circular arc radius R3) are disposed between each rounded corner (corresponding to a circular arc radius R1) of the rectangular contour of the lens chassis 233 and two sides adjacent to the rounded corner, and the circular arc radius R2 of the first transition rounded corner is smaller than the circular arc radius R3 of the second transition rounded corner; the first transition rounded corner is adjacent to the long side, and the second transition rounded corner is adjacent to the short side; the circular arc radius R of the rounded corner is 10.5mm±1mm; the circular arc radius R1 of the first transition rounded corner is 22.5mm±1mm; the circular arc radius R2 of the second transition rounded corner is 28.5mm±1mm.

In yet another optional embodiment, three views of the plano-convex lens are shown in FIGS. 22A and 22B, and the circular arc radius R of each of the four rounded corners of the rectangular contour of the lens chassis 233 is 12.5mm ± 1 mm.

In one specific embodiment, as shown in FIG. 22A, the maximum length L_1 of the lens plane 231 in the third extending direction is in a range of 43.6mm to 44.4mm, the maximum width L_3 of the lens plane 231 in the fourth extending direction is in a range of 33.6mm to 34.4mm, and the maximum thickness L_5 of the plano-convex lens is in a range of 18.6mm to 19.4mm, so that the better brightness and the uniformity of the projected picture can be obtained.

In one specific embodiment, as shown in FIG. 22A, the maximum length L_1 of the lens plane 231 in the third extending direction is 44mm, the maximum width L_3 of the lens plane 231 in the fourth extending direction is 34mm, and the maximum thickness L_5 of the plano-convex lens is 19mm; L_1, L_3 or L_5 may be scaled down or up by a factor within 10% of the corresponding one of L_1, L_3 and L_5 at the same proportion, and the obtained plano-convex lens may also meet the design requirement. Optionally, the maximum length of the lens plane in the third extending direction, the maximum width of the lens plane in the fourth extending direction, and the maximum thickness of the plano-convex lens are values obtained by scaling up 44mm, 34mm, 19mm by X times at the same proportion, respectively; wherein X is in a range of 0.9 to 1.1. Here, X times is collectively referred to as "scaling up"; and actually, if the X times is less than 1 time, the corresponding value is scaled down; and if the X times is equal to 1 time, the corresponding value is not changed; if the X times is more than 1 time, the corresponding value is scaled up.

In one specific embodiment, as shown in FIG. 22A, the maximum length L_1 of the lens plane 231 in the third extending direction is 44mm, the maximum length of the light emitting region in the first extending direction is 13.6mm, and the maximum thickness L_5 of the plano-convex lens is 19 mm; and a ratio of the maximum length L_1 of the lens plane 231 in the third extending direction to the maximum length of the light emitting region in the first extending direction is 3.3 (44mm/13.6mm); the maximum width L_3 of the lens plane 231 in the fourth extending direction is 34mm, the maximum width of the light emitting region in the second extending direction is 9mm, and a ratio of the maximum width L_3 of the lens plane 231 in the fourth extending direction to the maximum width of the light emitting region in the second extending direction is 3.8 (34 mm/9 mm). In this embodiment, L_1, L_3 or L_5 may be scaled down or up by a factor within 10% of the corresponding one of L_1, L_3 and L_5 at the same proportion, and the obtained plano-convex lens may also meet the design requirement. In the present embodiment, optionally, the distance D_1 between the light emitting region and the lens plane 231 is in a range of 1.5mm to 4 mm; preferably, D_1 is in a range of 2mm to 2.5 mm; further preferably, D_1 is 2 mm. In the present embodiment, optionally, the maximum length L_2 of the corresponding lens chassis 233 in the third extending direction is 48 mm; the maximum width L_4 of the lens chassis 233 in the fourth extending direction is 36 mm; the thickness L_6 of the lens chassis 233 is 2 mm. The circular arc radius R of each of the four rounded corners of the rectangular contour of the lens chassis 233 is 12.5mm ± 1 mm. With such the size, the better effect can be obtained in aspects such as the collimation degree, the utilization rate of the light energy, the imaging uniformity and the like of the light irradiated to the display region of the display panel.

In another specific embodiment, as shown in FIG. 22B, the maximum length L_1 of the lens plane 231 in the third extending direction is in a range of 36.5mm to 37.3mm, the maximum width L_3 of the lens plane 231 in the fourth extending direction is in a range of 28.5mm to 29.3mm, and the maximum thickness L_5 of the plano-convex lens is in a range of 14.9mm to 15.7mm, so that the better brightness and the uniformity of the projected picture can be obtained.

In another specific embodiment, as shown in FIG. 22B, the maximum length L_1 of the lens plane 231 in the third extending direction is 36.9mm, the maximum width L_3 of the lens plane 231 in the fourth extending direction is 28.9mm, and the maximum thickness L_5 of the plano-convex lens is 15.3 mm; L_1, L_3 or L_5 may be scaled down or up by a factor within 10% of the corresponding one of L_1, L_3 and L_5 at the same proportion, and the obtained plano-convex lens may also meet the design requirement. Optionally, the maximum length of the lens plane in the third extending direction, the maximum width of the lens plane in the fourth extending direction, and the maximum thickness of the plano-convex lens are values obtained by scaling up 36.9mm, 28.9mm, 15.3mm by X times at the same proportion, respectively; wherein X is in a range of 0.9 to 1.1. Here, X times is collectively referred to as "scaling up"; and actually, if the X times is less than 1 time, the corresponding value is scaled down; and if the X times is equal to 1 time, the corresponding value is not changed; if the X times is more than 1 time, the corresponding value is scaled up.

In another specific embodiment, as shown in FIG. 22B, the maximum length L_1 of the lens plane 231 in the third extending direction is 36.9mm; the maximum width L_3 of the lens plane 231 in the fourth extending direction is 28.9 mm; the maximum thickness L_5 of the plano-convex lens is 15.3 mm; and a ratio of the maximum length L_1 of the lens plane 231 in the third extending direction to the maximum length of the light emitting region in the first extending direction is 2.7 (36.9 mm/13.6 mm); the maximum width L_3 of the lens plane 231 in the fourth extending direction is 28.9mm, the maximum width of the light emitting region in the second extending direction is 9mm, and a ratio of the maximum width L_3 of the lens plane 231 in the fourth extending direction to the maximum width of the light emitting region in the second extending direction is 3.2 (28.9 mm/9 mm). In this embodiment, L_1, L_3 or L_5 may be scaled down or up by a factor within 10% of the corresponding one of L_1, L_3 and L_5 at the same proportion, and the obtained plano-convex lens may also meet the design requirement. In the present embodiment, optionally, the distance D_1 between the light emitting region and the lens plane 231 is in a range of 1.5mm to 4mm; preferably, D_1 is in a range of 2mm to 2.5mm; further preferably, D_1 is 2.5mm. In the present embodiment, optionally, the maximum length L_2 of the lens chassis 233 in the third extending direction is 48mm; the maximum width L_4 of the lens chassis 233 in the fourth extending direction is 35.7 mm; the thickness L_6 of the lens chassis 233 is 1.7 mm. The circular arc radius R of each of the four rounded corners of the rectangular contour of the lens chassis 233 is 12.5mm ± 1 mm. With such the size, the better effect can be obtained in aspects such as the collimation degree, the utilization rate of the light energy, the imaging uniformity and the like of the light irradiated to the display region of the display panel.

In some optional embodiments, as shown in FIG. 21A, the projection device further includes the second lens LNS2 disposed on a side of the display panel (e.g., the display panel PNL in FIG. 24A) away from the light outgoing side of the display panel, specifically between the condenser lens 23 and the display panel PNL, and configured to collimating the received light. The second lens LNS2 is located between the light emitting element 21 and the display panel PNL, which means that when the projection device is projecting, the light from the light emitting element 21 passes through the second lens LNS2 and then passes through the display panel PNL. An optical distance (S1+S2) from a center of the lens convex surface 232 of the plano-convex lens to a center of the light outgoing surface of the second lens LNS2 is in a range of 50 mm to 70 mm. The optical distance should not be too great, otherwise, the volume of the projection device is too great, and the portability and the occupied space cannot meet the requirement; the optical distance should not be too small, otherwise the mutual effect and the interference between the respective components in the optical path are caused. Therefore, the optical distance is set in such the range, so that the defects can be avoided. For example, the second lens LNS2 is a fresnel lens with a textured surface in the light outgoing surface.

In some optional embodiments, the outer contour of the second lens LNS2 is rectangular. Optionally, a length of the second lens LNS2 is greater than that of the display region of the display panel, and a difference between the length of the second lens LNS2 and the length of the display region of the display panel is no more than 20mm, preferably in a range of 5mm to 20mm; a width of the second lens LNS2 is greater than a width of the display region of the display panel PNL, and a difference between the width of the second lens LNS2 and the width of the display region of the display panel PNL is not more than 20mm, preferably in a range of 5mm to 20mm. Thus, the second lens LNS2 is easily fixed while ensuring the optical effect of the second lens LNS2.

In some optional embodiments, the maximum length of the second lens LNS2 is in a range of 98mm to 112 mm; the maximum width of the second lens LNS2 is in a range of 55 mm to 66 mm. The size of the contour of the second lens LNS2 may match with the size of the contour of the display region, and is especially suitable for the display region of the display panel PNL with the diagonal of 4.45 inches, and suitable for the display region of the display panel with the diagonal in a range of 4.0 inches to 4.45 inches. For example, the second lens LNS2 is rectangular, and the display region of the display panel PNL is also rectangular. For example, a focal length of the second lens LNS2 is in a range of 80mm to 110mm, so that the uniformity and brightness of the projected picture can be optimized. Preferably, the focal length of the second lens LNS2 is in a range of 88mm to 102mm. For example, the focal length of the second lens LNS2 is 90mm, 95mm, 100 mm.

In some optional embodiments, the length direction of the second lens LNS2 is parallel to the length direction of the display region of the display panel, and the width direction of the second lens LNS2 is parallel to the width direction of the display region of the display panel. In some optional embodiments, the length direction of the second lens LNS2 is parallel to the length direction of the display region of the display panel, and the width direction of the second lens LNS2 and the width direction of the display region of the display panel have an angle therebetween, for example, an angle not exceeding 10°, for example, of 5°.

In other optional embodiments, the width direction of the second lens LNS2 and the width direction of the display region of the display panel are parallel to each other, and the length direction of the second lens LNS2 and the length direction of the display region of the display panel have an angle therebetween, for example, not exceeding 10°, for example, of 5°.

In some optional embodiments, as shown in FIG. 21A, the projection device further includes the second mirror MR2 disposed between the condenser lens 23 and the second lens LNS2, and the light incident surface of the second mirror LNS2 and the lens plane 231 have an angle therebetween. The second mirror is configured to reflect the light emitted from the light emitting element 21 into the display panel PNL. Specifically, the light emitted from the light emitting element 21 is firstly converged by the condenser lens 23 and then emitted to the second mirror MR2, reflected by the second mirror MR2 and irradiated to the second lens LNS2, and then collimated by the second lens LNS2 and emitted to the display panel PNL. Optionally, the angle O1 between the light incident surface of the second mirror LNS2 and a plane perpendicular to the lens plane 231 may be 49°. Further optionally, an angle O2 between the light incident surface of the second mirror MR2 and the light incident surface of the second lens LNS2 may be 41°.

In some optional embodiments, as shown in FIG. 21A, the projection device further includes the light-transparent part GLS disposed between the display panel PNL and the second lens LNS2, and the light-transparent part GLS and the display panel PNL have a space therebetween, a material of the light-transparent part GLS is, for example, glass and may function as a heat insulator, for example. Optionally, two side surfaces of the light-transparent part GLS are flat surfaces, and light is not converged or diverged before and after passing through the light-transparent part GLS; it is understood that the light-transparent part GLS does not function as an optical lens. For example, the first polarizing element POL1 is attached to one side of the light-transparent part GLS, and the first polarizing element POL1 may be a polarizer, such as an absorptive polarizer. The first polarizing element POL1 may also be an APF (advanced polarizer film) polarizer. In this case, the first polarizing element POL1 is attached to a side where the light incident surface of the light-transparent part GLS is located; for example, the second polarizing element POL2 is further provided on a side of the display panel PNL away from the first polarizing element POL1, and an absorption axis of the first polarizing element POL1 and an absorption axis of the second polarizing element POL2 have an angle of 90° therebetween.

In some optional embodiments, the outer contour of the light-transparent part GLS is rectangular; the length of the light-transparent part GLS is greater than the length of the display region of the display panel, and the difference between the length of the light-transparent part GLS and the length of the display region of the display panel is not more than 20mm, preferably in a range of 5mm to 20mm; the width of the light-transparent part GLS is greater than the width of the display region of the display panel, and the difference between the width of the light-transparent part GLS and the width of the display region of the display panel is not more than 20mm, preferably in a range of 5mm to 20mm. Therefore, the light-transparent part GLS can be conveniently fixed without affecting the optical effect.

In some optional embodiments, the maximum length of the light-transparent part GLS is in a range of 98mm to 112 mm; the maximum width of the light-transparent part GLS is in a range of 55mm to 66 mm. The contour size of the light-transparent part GLS may match with the contour size of the display region, and is particularly suitable for the display region of the display panel PNL with a diagonal of 4.45 inches and is also suitable for the display region of the display panel with the diagonal in a range of 4.0 inches to 4.45 inches; for example, the second lens LNS2 is rectangular, the display region of the display panel PNL is also rectangular.

In some optional embodiments, the length direction of the light-transparent part GLS is parallel to the length direction of the display region of the display panel, and the width direction of the light-transparent part GLS is parallel to the width direction of the display region of the display panel. In some optional embodiments, the length direction of the light-transparent part GLS is parallel to the length direction of the display region of the display panel, and the width direction of the light-transparent part GLS and the width direction of the display region of the display panel have an angle therebetween, for example, an angle not exceeding 10°, for example, of 5°.

In other optional embodiments, the width direction of the light-transparent part GLS and the width direction of the display region of the display panel are parallel to each other, and the length direction of the light-transparent part GLS and the length direction of the display region of the display panel have an angle therebetween, for example, not exceeding 10°, for example, of 5°.

In some optional embodiments, the light-transparent part GLS is disposed in parallel with the second lens LNS2.

In some optional embodiments, the shape of the light-transparent part GLS and the shape of the second lens LNS2 may be the same as the shape of the display panel PNL, for example, both rectangular shapes. The size of the light-transparent part GLS may be the same as that of the second lens LNS2.

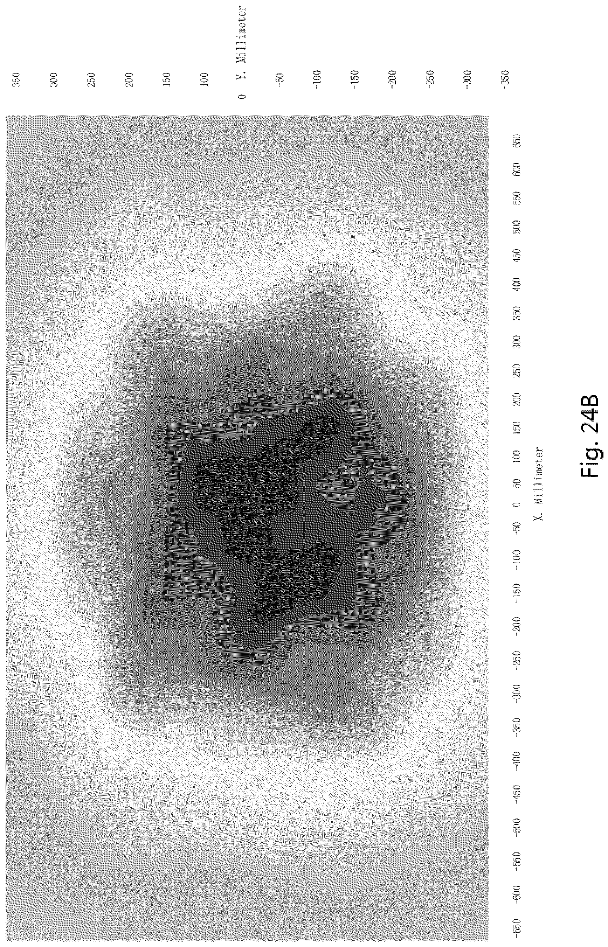

The following simulation for the imaging optical path of the projection device provided in the embodiment of the present disclosure may obtain a simulation diagram of the optical path as shown in FIG. 24A and a simulation diagram of an illuminance in the display region of the display panel as shown in FIG. 24B. The illuminance data obtained by the simulation are shown in table 1 below, and the brightness and the brightness uniformity are shown in table 2 below. Table 1 shows the brightness sample values at positions in the 60-inch projected picture, and the positions in the table correspond to the positions of the regions in the projected picture.

**TABLE 1. A table of illuminance for positions at the display region of the display panel**

| | | | | |
|---|---|---|---|---|
| 102 | | | | 102 |
| | 194 | 270 | 192 | |
| | 221 | 315 | 217 | |
| | 203 | 280 | 200 | |
| 102 | | | | 110 |

**TABLE 2. A table of brightness and uniformity for positions at the display region of the display panel**

| | |
|---|---|
| Brightness | 227.74 |
| Uniformity | 62.65% |
| A | 52.49% |
| B | 52.96% |
| C | 50.10% |
| D | 54.83% |

The first value and the last value in the first row and the first value and the last value in the last row in table 1, the four values in total, correspond to the illuminance of four corners (respectively four positions A, B, C, D) of the 60-inch projected picture, respectively, and the rest values are the illuminance of the central positions of 3×3 rectangles (nine rectangles in total) with an equal area obtained by averagely dividing the 60-inch picture. As can be seen from the table 1, the illuminance at the four corners of the display region of the display panel is approximately equivalent, and the illuminance uniformity at different positions in the central region of the display panel is better. As can be seen from the table 2, the brightness uniformity of the display region of the display panel reaches 62.65%. Specifically, the nine values in the central regions of the display region of the display panel in the table 1 are, in order from left to right and from top to bottom, P1 to P3, P4 to P6, and P7 to P9, and the brightness uniformity of the display region of the display panel is equal to a percentage representation of an average value of P1, P3, P7, and P9 divided by P5. The brightness uniformity at the four corners (four locations A, B, C, D, respectively) of the display region of the display panel is approximately equivalent. In addition, the collimation degree of the light irradiated to the display region of the display panel can reach a range within ±8°. Therefore, in the projection device provided by the embodiment, the first aspect ratio is greater than or equal to the aspect ratio of the display region of the display panel, which is beneficial to improving the utilization rate of the light energy. On the basis, the light emitted from the light emitting element 21 is converged or shaped by using the condenser lens, so that the light irradiated to the display region of the display panel is relatively collimated and uniform, and the imaging uniformity can be improved.

It should be noted that in practical applications, the process requirements of the condenser lens 23 include, but are not limited to: a roughness better than Ra0.8; the lens plane 231 and the lens convex surface 232 of the condenser lens 23 are both plated with an antireflection film with a thickness greater than or equal to 420nm and less than or equal to 680 nm; a dimensional tolerance of the condenser lens 23 is ± 0.3mm. A material of the condenser lens 23 includes high borosilicate glass (e.g., H-PZ33) or a material having a refractive index of approximately 1.47. The process for forming the condenser lens 23 includes: compression molding, polishing, coating, polishing, etc.

It should be noted that the specific contour size of the plano-convex lens provided in the embodiment of the present disclosure is not limited to the contour size in the above embodiment. In practical application, the contour size of the plano-convex lens may be scaled (by 90% to 110%) at the same proportion according to specific requirements, which has the same optical effect.

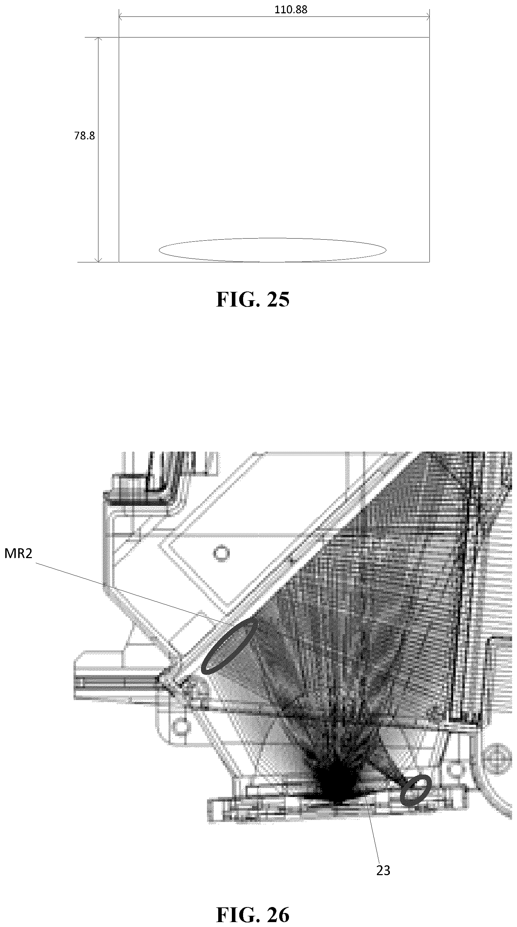

FIG. 25 is a schematic diagram of a second mirror in a projection device according to some exemplary embodiments of the present disclosure. As shown in FIG. 25, the second mirror includes a specular reflection region disposed on the whole surface. When light is irradiated to an edge region (a region circled in the figure) of the second mirror MR2 close to the light source component 2, as shown in the diagram of the optical path in FIG. 26, and the light is specularly reflected back to the focusing lens and then is converged to a small region (a region circled in a small circle in FIG. 26). In the small region where light is converged, a high temperature is highly likely produced, so that other devices in the region are burnt.

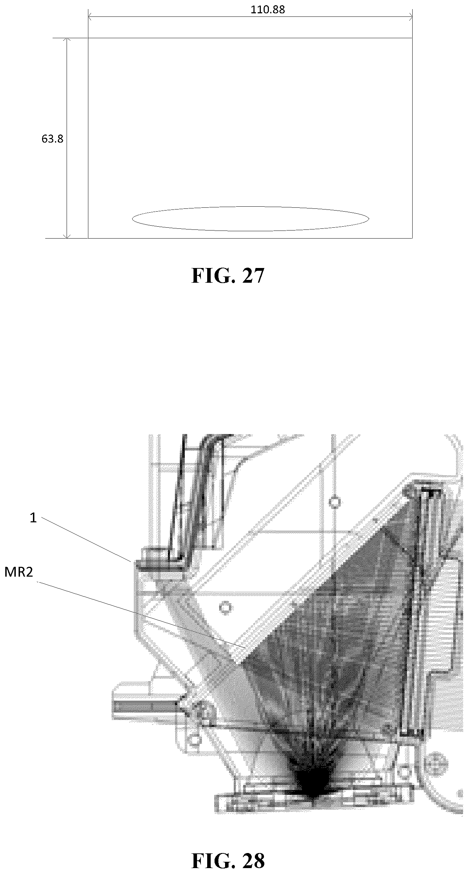

In order to avoid the problem that the light is reflected by the light source back into the plano-convex lens 23 again which causes the convergence of the light and thus burns the convergence region, in some embodiments, the second mirror MR2 may be narrowed, in a configuration as shown in FIG. 27, which has the same shape as that shown in FIG. 25, except that an end of the second mirror MR2 close to the light source component 2 is narrowed. Thus, the second mirror MR2 does not reflect the part of the light, as shown in the diagram of the optical path in FIG. 28. However, the light is directly irradiated to the narrowed region, such as the housing 1 and/or the second fan 7, so that the temperature rise of the irradiated portion is caused and thus, the device is extremely easy to age and the service life of the device is influenced. Thus, it is necessary to avoid the problem. Thus, a thermally conductive structure, such as a metal film or heat dissipation fins, may be provided on at least a portion of the irradiated region, for rapidly dissipating the heat, in order to prevent the heat accumulation.

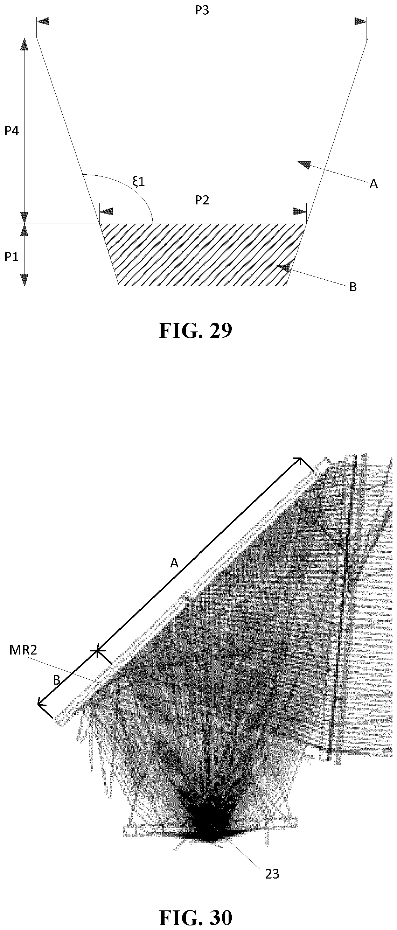

The embodiment of the present disclosure provides a diagram of an optical path of the second mirror MR2 in the projection device, referring to FIG. 29, light emitted from the light emitting element 21 sequentially passes through the condenser lens, the second mirror MR2, the display panel MR2 and the projection lens 3. The second mirror MR2 includes: a specular reflection region A and a non-specular reflection region B; the non-specular reflection region B is configured such that the light emitted from the condenser lens cannot form the reflected light in the non-specular reflection region B that may enter the condenser lens again. Referring to FIG. 30, light emitted from the light source component 2 may be specularly reflected in the specular reflection region A, and the reflected light may directly enter the display panel PNL for display; the light emitted from the light source component 2 cannot form specular reflection in the non-specular reflection region B, and is difficult to reflect back to the condenser lens to form the light convergence, so that the problem of burning the device is solved.

For example, a size of the specular reflection region A is designed such that light emitted from the condenser lens passes through the specular reflection region A and cannot enter the condenser lens again through the specular reflection. For example, the size of the specular reflection region A is designed such that light emitted from the condenser lens passes through the specular reflection region A and enters the condenser lens without being converged, or such that the influence of converging light on the reliability of the projection device is acceptable.

The specular reflection region A may be understood as a region capable of implementing a specular reflection function, including a reflective film, for example, a high-reflective film.

A material of the reflective film is not limited in the present disclosure as long as the reflective function is achieved. For example, the material of the reflective film may be a metallic reflective film or an all-dielectric reflective film, or a metallic dielectric reflective film. Specifically, the reflective film may be an aluminum film, a silver film, or the like. For example, the aluminum film or the silver film may be formed on the glass through a metal plating process.

In some embodiments, the non-specular reflection region B includes a light absorption region, and the light emitted from the light source component 2 is at least partially absorbed in the non-specular reflection region B and is difficult to reflect back to the condenser lens to form the light convergence. For example, the light absorption region may form black ink on a mirror surface of the second mirror MR2 for absorbing light. For example, the light absorption region may include thermally conductive materials, such as metals like copper, aluminum, or the like; for example, the light absorption region may be formed in the form of heat fins, so that heat can be quickly transferred; for example, a side of the light absorption region facing the light emitting element 21 may be matt, so that the unabsorbed light is not specularly reflected.

In some embodiments, the non-specular reflection region B includes a diffuse reflection region, light emitted from the light source component 2 may be diffusely reflected in the diffuse reflection region, and a reflection angle of the light is uncertain. On one hand, the influence of the diffusely reflected light on the display effect can be ignored; on the other hand, the diffusely reflected light cannot be converged again by the condenser lens; on the other hand, a significant heat accumulation cannot be formed in the diffuse reflection region due to light irradiation, and the reliability problem caused by aging of a device due to the local irradiation is solved.

It should be noted that the diffuse reflection region may be configured to diffusely reflect all of the irradiated light, or a part of the light irradiated to the diffuse reflection region. Under the condition that the diffuse reflection region is configured to diffusely reflect a part of the light irradiated to the diffuse reflection region, the light may be absorbed by the diffuse reflection region, so that the influence of the irradiated light can be reduced to an allowable range, and the reliability of the projection device is ensured.

Specifically, the non-specular reflection region B of the second mirror MR2 may diffusely diffuse the invalid light, so as to prevent the invalid light from directly irradiating the housing 1 and/or the second fan 7, and avoid the problem of over-high temperature and aging caused by directly irradiating the light. Meanwhile, the light diffusely reflected by the non-specular reflection region B cannot be converged again, which generates high temperature and burns the converged region. Therefore, the performance of the projection device can be improved, and the service life of the projection device can be prolonged.

In some embodiments, there is no segment gap in a reflection surface of the specular reflection region A and a surface of the non-specular reflection region B close to the condenser lens.

In some embodiments, the specular reflection region includes the reflective film and a smooth substrate. For example, the reflective film is closer to the condenser lens than the smooth substrate. For example, the reflective film may be coated on the smooth substrate, and light is specularly reflected on the reflective film. For example, the reflective film may be made of a metal film. For example, the reflective film may be an aluminum film or a silver film, and may be formed on the smooth substrate by a metal plating process. The smooth substrate is, for example, smooth glass. For example, the smooth substrate is transparent.

In some embodiments, the diffuse reflection region includes the reflective film and a rough substrate. The rough substrate is, for example, ground glass. For example, the rough substrate is transparent.

For example, the reflective film is closer to the condenser lens than the rough substrate. For example, a rough surface of the rough substrate is arranged opposite to the reflective film, the reflective film is tightly combined with the rough substrate, and a surface of the reflective film close to the condenser lens also has a rough morphology, which may diffusely reflect the light. For example, the reflective film may be an aluminum film or a silver film, and may be formed on the rough substrate by the metal plating process. The rough substrate may be formed through the following process: roughening a smooth substrate (e.g., through a dull polish process or a sand blasting process), and then applying the reflective film to both the smooth substrate and the rough substrate through a single process (e.g., through a plating process).

In some embodiments, the second mirror MR2 includes a substrate and a reflective film located on a side of the substrate close to the condenser lens, the reflective film covers a portion of the substrate region, wherein the region covered by the reflective film is the specular reflection region A; the region not covered by the reflective film includes the non-specular reflection region B. For example, the reflective film may be attached to the mirror MR2. For example, the substrate has a smooth surface close to the reflective film, which is favorable for the attachment of the reflective film. For example, the substrate has a rough surface away from the reflective film. The region including the rough surface and not covered by the reflective film forms the diffuse reflection region. For example, the whole surface of the substrate away from the reflective film is the rough surface, so that the process can be simplified. For example, the substrate is a transparent substrate.

For example, the roughen surface may be provided on a side of the substrate close to the condenser lens. For example, the rough surface and the reflective film are both located on the same side of the substrate, and thus, the region covered by the reflective film is the specular reflection region A, and the region of the substrate not covered by the reflective film and including the rough surface is the non-specular reflection region B. For example, the reflective film may be attached to a surface of the substrate close to the condenser lens; for example, the attachment region is smooth.

In some embodiments, the rough surface may be disposed on a side of the substrate close to the condenser lens, where a partial region includes the rough surface and a partial region includes the smooth surface. The reflective film is arranged on a side of the substrate away from the condenser lens. For example, the reflective film may be made of a metal film. For example, the reflective film may be an aluminum film or a silver film, and may be formed by, for example, a metal plating process. For example, the surface of the substrate away from the condenser lens is smooth, so that on the side of the substrate close to the condenser lens, the region corresponding to the rough surface is the diffuse reflection region, and the region corresponding to the smooth surface is the specular reflection region A.

In some embodiments, referring to FIGS. 29 and 30, a center of the non-specular reflection region B is closer to the light emitting element than a center of the specular reflection region A. For example, the specular reflection region A and the non-specular reflection region B divide the second mirror MR2 into two regions on "a side and the other side" (an upper side and a lower side as shown in FIG. 29). As a whole, the non-specular reflection region B is closer to the light emitting element than the specular reflection region A, so that light passing through the non-specular reflection region B is difficult to reflect back to the condenser lens to form light convergence, so that the problem of burning the device is solved.

In some embodiments, referring to FIG. 29, the contour of the non-specular reflection region B may be a bar shape. For example, the contour of the non-specular reflection region B may a trapezoid. In practical applications, the contour of the non-specular reflection region B may be set to be an isosceles trapezoid. For example, the contour of the non-specular reflection region B may be an elongated trapezoid.

In some embodiments, referring to FIG. 29, a width P1 of the non-specular reflection regions B is in a range of 13 mm to 18 mm. For example, the width P1 of the non-specular reflection region B is in a range of 14.5 mm to 15.5 mm. Therefore, the non-specular reflection region B can be ensured to have a larger area, thereby effectively eliminating the influence of re-converging the reflected light by the condenser lens on the reliability of the projection device, while the compact layout of components in the projection device is met.

In some embodiments, the condenser lens includes the plano-convex lens 23, the plano-convex lens 23 having the lens plane and the lens convex surface facing away from each other; the lens plane and the light outgoing side of the light emitting element 21 are opposite to each other and are arranged at intervals. The lens plane and the light outgoing side of the light emitting element 21 may be opposite to each other and be arranged at intervals, so that light emitted from the light emitting element 21 may be converged, and thus, the light is converged or shaped, the utilization rate of the light emitted from the light emitting element 21 is ensured, and the energy consumption is saved. For example, the plano-convex lens 23 is the condenser lens. For example, the condenser lens further includes the lens chassis located on a side of the plano-convex lens close to the light emitting element 21, and the lens chassis is disposed in contact with the plano-convex lens, to mount and fix the plano-convex lens.

In some embodiments, as shown in FIG. 29, the outer contour of the second mirror MR2 is a trapezoid, a lower base of the trapezoid is closer to the light emitting element 21 than an upper base of the trapezoid; for example, the non-specular reflection region B is located on a side of the upper base of the trapezoid. In this way, the second mirror MR2 can effectively reflect the imaging light, and the volume can be further reduced, thereby improving the compactness of the design for the projection device.

With reference to the above design concept, the contour of the specular reflection region A of the second mirror MR2 may also be a trapezoid; for example, the non-specular reflection region B is located on a side of the upper base of the specular reflection region way from the lower base of the specular reflection region A. The shape of the non-specular reflection region B may be one of a trapezoid or a rectangle.

In practical applications, the shape of the specular reflection region A may be an isosceles trapezoid.

In some embodiments, an angle between the extending plane of the second lens LNS2 and the light reflecting surface of the second mirror MR2 is in a range of 34° to 48°, so that the compactness of the projection device is better. A plane where the second lens LNS2 is located can be understood as a plane passing through the optical center of the second lens and perpendicular to the optical axis of the second lens. When the second lens LNS2 is a fresnel lens, the plane where the second lens LNS2 is located is parallel to the extending plane of the second lens LNS2.

In some embodiments, a ratio of a length P3 of the lower base to a length P2 of the upper base of the specular reflection region A is in a range of 1.4 to 1.8; an angle ξ1 1 between the upper base and one waist of the specular reflection region A is in a range of 98° to 113°, so that the compactness of the projection device is better.

In some embodiments, the length P3 of the lower base of the specular reflection region A is in a range of 105 mm to 115 mm, the length P2 of the upper base is in a range of 61.8 mm to 78.6 mm, and a height P4 of the specular reflection region A is in a range of 59.8 mm to 75.3 mm, so that the compactness of the projection device is better.

In one specific embodiment, the angle between the extending plane of the second lens LNS2 and the light reflecting surface of the second mirror MR2 is 41°; the shape of the specular reflection region A of the second mirror MR2 is an isosceles trapezoid; the ratio of the length P3 of the lower base to the length P2 of the upper base of the specular reflection region A of the second mirror MR2 is in a range of 1.4 to 1.8; and the angle ξ1 between the upper base and one waist of the specular reflection region A of the second mirror MR2 is in a range of 105° to 111°. For example, the length P3 of the lower base of the specular reflection region A of the second mirror MR2 is in a range of 110.8±3mm; the length P2 of the upper base is in a range of 67.8±3mm; and the height P4 is in a range of 63.8±3mm; preferably, the length P3 of the lower base of the specular reflection region A of the second mirror MR2 is in a range of 110.8±0.3mm, the length P2 of the upper base is in a range of 67.8±0.3mm, and the height P4 is in a range of 63.8±0.3mm.

The width P1 of the non-specular reflection region B is in a range of 13 mm to 18mm. For example, the width P1 of the non-specular reflection region B is in a range of 14.5 mm to 15.5 mm. Therefore, the compactness of the projection device is better.

In some embodiments, the display device further includes the first mirror MR1, and the first mirror MR1 is disposed to reflect light emitted from the display panel PNL into the projection lens 3. Specifically, the first mirror MR1 is disposed on a side of the display panel PNL away from the light source component 2, and the first mirror MR1 is disposed on a side of the first lens LNS1 away from the light source component 2. The first mirror MR1 may be a plane mirror. The first mirror MR1 may reflect the light emitted from the display panel PNL into the projection lens 3.

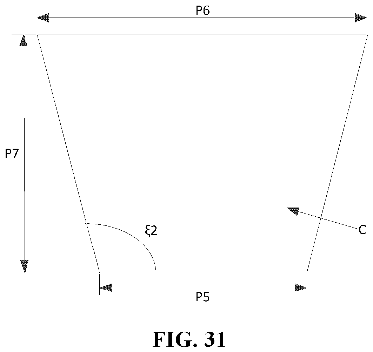

FIG. 31 is a schematic diagram of a first mirror in a projection device according to some exemplary embodiments of the present disclosure. Referring to FIG. 31, a portion of the first mirror MR1 closer to the display panel PNL has a smaller width, and a portion of the first mirror MR1 farther from the display panel PNL has a larger width. For example, the outer contour of the first mirror MR1 is trapezoidal.

For example, the first mirror MR1 includes an imaging specular reflection region C, which may have a trapezoidal contour. For example, the contour of the imaging specular reflection region C is the same as the contour of the second mirror MR2. For example, the contour of the imaging specular reflection region C may be an isosceles trapezoid.

In one specific embodiment, the angle between the extending plane of the display panel PNL and the light reflecting surface of the first mirror MR1 is 45°; the shape of the first mirror MR1 is an isosceles trapezoid, and an angle ξ2 between the upper base and one waist of the first mirror MR1 is in a range of 98° to 100°. For example, a length P6 of the lower base of the first mirror MR1 is in a range of 110.8±3mm, a length P5 of the upper base is in a range of 81.0±3mm, and a height P7 of the first mirror MR1 is in a range of 99.0±3mm. For example, the length P6 of the lower base of the first mirror MR1 is in a range of 110.8±0.3mm, the length P5 of the upper base is in a range of 81.0±0.3mm, and the height P7 of the first mirror MR1 is in a range of 99.0±0.3mm. Therefore, the compactness of the projection device is better.

It should be understood that certain exemplary embodiments of the present disclosure have been described and illustrated herein, but various other means and/or structures for performing the functions and/or obtaining the results and/or one or more advantages described herein will be readily apparent to one of ordinary skill in the art, and each of such variations and/or modifications is deemed to be within the scope of the embodiments of the present disclosure. More generally, it will be readily appreciated by one of ordinary skill in the art that all parameters, dimensions, materials, and configurations described herein are meant to be exemplary and that the actual parameters, dimensions, materials, and/or configurations will depend upon one or more specific applications using the teachings of the present disclosure. It will be appreciated by one of ordinary skill in the art that many equivalents to the specific embodiments of the utility model described herein can be ascertained by using no more than routine experiment. Therefore, it should be understood that the foregoing embodiments are presented by way of example only and the embodiments of the utility model may be practiced otherwise than as specifically described and claimed within the scope of the appended claims and equivalents thereto. Embodiments of the utility model are directed to each individual feature, system, article, material, kit, and/or method described herein. **In** addition, any combination of two or more such features, systems, articles, materials, kits, and/or methods is included within the scope of the present utility model, if such features, systems, articles, materials, kits, and/or methods are not mutually inconsistent.

Unless defined otherwise, all technical and scientific terms used in the present disclosure have the same meaning as commonly understood by one of ordinary skill in the art to which the present disclosure belongs.

The phrase "and/or" as used herein in the specification and claims should be understood to mean "either or both" of the elements so combined, i.e., elements that are present in combination in some cases and not present in combination in other cases. Several elements listed with "and/or" should be interpreted in the same manner, i.e., "one or more" of the elements so combined. In addition to the elements specifically identified by the "and/or" clause, other elements may optionally be present, regardless of whether related to those elements specifically identified or not. Thus, as a non-limiting example, when used in conjunction with the open-ended language such as "including", a reference to "A and/or B" may refer to only A (optionally including elements other than B) in one embodiment; only B (optionally including elements other than A) in another embodiment; both A and B (optionally including other elements) in yet another embodiment, and so forth.

One of ordinary skill in the art will understand what the term "substantially" herein (such as in "substantially all" or in "substantially consisting of") means. The term "substantially" may also include embodiments having "entirely", "completely", "all," or the like. Thus, in the embodiments, the adjective is also substantially removable. Where applicable, the term "substantially" may also relate to 90% or more, such as 95% or more, particularly 99% or more, even more particularly 99.5% or more, including 100%. The term "comprising" also includes embodiments in which the term "comprising" means "consisting of". The term "and/or" especially relates to one or more of the items mentioned before and after the term "and/or". For instance, the phrase "item 1 and/or item 2" and similar phrases may refer to one or more of the item 1 and the item 2. The term "comprising" may mean "consisting of" in one embodiment, but may also mean "comprising at least the defined species and optionally one or more other species" in another embodiment.

Furthermore, the terms "first", "second", "third" and the like in the description and in the claims are used for distinguishing between similar elements and do not represent any order, quantity or importance. It is to be understood that the terms so used are interchangeable under appropriate circumstances and that the embodiments of the present disclosure described herein can be operated in other orders than described or illustrated herein.

It should be noted that the above embodiments illustrate, rather than limit, the present disclosure, and that one of ordinary skill in the art will be able to design many alternative embodiments without departing from the scope of the appended claims. **In** the claims, any reference sign placed in parentheses shall not be construed as limiting the claims. Use of the verb "comprise" and its conjugations does not exclude the presence of elements or steps other than those stated in the claims. The word "a" or "an" in the claims of the present disclosure does not exclude a plurality, only for convenience of description and should not be construed as a limitation on the scope of the present disclosure.

The present disclosure may be implemented by means of hardware including several distinct elements, and by means of a suitably programmed computer. **In** the device claim enumerating several means, several of these means may be embodied by the same item of hardware. The mere fact that certain measures are recited in mutually different dependent claims does not indicate that a combination of these measures cannot be used to advantage.

The present disclosure is further suitable for a device including one or more of the characterizing features described in the present description and/or shown in the drawings. The present disclosure further relates to methods or processes that include one or more of the characterizing features described in this specification and/or illustrated in the drawings.

Various aspects discussed in the present disclosure can be combined together to provide additional advantages. In addition, it will be appreciated by one of ordinary skill in the art that embodiments may be combined together and that more than two embodiments may be combined together.

Furthermore, some features may form the basis of one or more divisional applications.

## Claims

1. A projection device, comprising a housing, a light source component, a projection lens, a first heat sink and a first fan, wherein the light source component comprises a light emitting element, wherein
the housing comprises a front surface and a rear surface opposite to each other, the front surface comprises a first opening and a second opening; the housing further comprises a third opening, at least a part of the third opening is in the rear surface; the light emitting element is at the first opening; the projection lens is at the second opening; and the first heat sink is at the third opening of the housing;
wherein the light emitting element, the projection lens, the first heat sink, and the housing together form an accommodating space; and the first fan is on a side of the light emitting component away from the accommodating space; and
the light source component further comprises a light emitting element base, and the light emitting element is on the light emitting element base; the first fan comprises a first air inlet close to the light emitting element base; and the first air inlet and the light emitting element base comprise a first gap therebetween.

2. The projection device of claim 1, wherein the first air inlet comprises a first region covered by an orthographic projection of the light emitting element base on the first air inlet and a second region on a side of the first region away from the projection lens.

3. The projection device of claim 2, wherein the first air inlet further comprises a third region on a side of the first region away from the second region, wherein a width of the third region is less than a width of the second region.

4. The projection device of claim 2, wherein the projection device comprises a base plate;
the base plate is opposite to the housing; the housing and the base plate comprise a first outer air duct therebetween, and/or the base plate is opposite to a portion of the first heat sink, and the portion and the base plate comprise a first outer air duct therebetween; and
the first outer air duct is configured such that air passes through the first outer air duct and then enters the first fan when the projection device is operating.

5. The projection device of claim 4, wherein the first outer air duct is opposite to the second region.

6. The projection device of claim 2, wherein the projection device comprises a circuit board;
the circuit board is opposite to the housing; the housing and the circuit board comprise a second outer air duct therebetween; and/or the circuit board is opposite to a portion of the first heat sink, and the portion and the circuit board comprise a second outer air duct therebetween; and
the second outer air duct is configured such that air passes through the second outer air duct and then enters the first fan when the projection device is operating; the second outer air duct is opposite to the second region.

7. The projection device of claim 1, wherein the first heat sink has an arcuate shape as a whole.

8. The projection device of claim 1, wherein the first heat sink comprises a wrapping portion and a plurality of first heat dissipation fins on a side of the wrapping portion away from the accommodating space; the wrapping portion covers the third opening, the plurality of first heat dissipation fins comprise a plurality of first heat dissipation portions, respectively, and the first heat sink is configured to allow air to enter the first fan from the first air inlet after passing through the plurality of first heat dissipation portions.

9. The projection device of claim 8, wherein the projection device comprises at least one of a circuit board and a base plate;
the projection device comprises the circuit board, at least a portion of the first heat dissipation portion is between the wrapping portion and the circuit board, and/or,
the projection device comprises the base plate, at least a portion of the first heat dissipation portion is between the wrapping portion and the base plate.

10. The projection device of claim 9, wherein the circuit board comprises a second heat dissipation portion on a side of the circuit board close to the housing and/or on a side of the circuit board close to the first heat dissipation portion.

11. The projection device of claim 8, wherein the wrapping portion comprises a first wrapping sub-portion on a side on which the rear surface of the housing is located, and a second wrapping sub-portion on a different side from the side on which the rear surface of the housing is located; the second wrapping sub-portion and the first wrapping sub-portion are sequentially arranged; the first heat dissipation portion is a heat dissipation fin on a side of the second wrapping sub-portion away from the accommodating space.

12. The projection device of claim 1, wherein in an operating state of the projection device, the projection lens is higher than the light source component; the housing further comprises a bottom surface and a top surface, the bottom surface is lower than the top surface, and the front surface and the rear surface are connected to the top and bottom surfaces, respectively.

13. The projection device of claim 12, wherein in an operating state of the projection device, the projection device is configured to form an air duct between the bottom surface and a placement surface of the projection device; air entering the first air inlet comprises air passing through the air duct, and the air entering the air duct carries heat dissipated from the first heat sink.

14. The projection device of claim 1, further comprising:
a first polarizing element on a light outgoing side of the light source component to convert light emitted from the light source component into first polarized light having a first polarization direction;
a display panel on a side of the first polarizing element away from the light source component;
a first lens on a side of the display panel away from the light source component or between the display panel and the first polarizing element;
a first mirror configured to reflect light emitted from the display panel into the projection lens; and
a second polarizing element on a side of the display panel away from the first polarizing element to cause polarized light in the first polarization direction or a second polarization direction to emit outside from the projection lens, wherein the first polarization direction is perpendicular to the second polarization direction;
wherein the first mirror and the second polarizing element are of a same element or different elements; the display panel is a liquid crystal display panel.

15. The projection device of claim 14, wherein the projection device further comprises a light-transparent part;
the first lens is on a side of the display panel away from the light source component, the light-transparent part is between the light source component and the display panel, and the light-transparent part and the display panel comprise a second gap therebetween; or
the first lens is between the display panel and the first polarizing element, the light-transparent part is between the light source component and the first lens, and the light-transparent part and the first lens comprise a second gap therebetween;
the first polarizing element is attached to the light-transparent part.

16. The projection device of claim 15, comprising a second fan in the accommodating space and configured to promote internal air in the accommodating space to circulate, so that the internal air exchanges heat through the first heat sink; and
the second fan comprises a second air inlet and a second air outlet, the second air outlet is configured to discharge the internal air, and the second air inlet is configured to suck the internal air, so that the internal air is circularly flow in the accommodating space; a flow path of the internal air comprises the second gap.

17. The projection device of claim 16, wherein the first lens and the display panel have a third gap therebetween; the flow path of the internal air comprises the third gap, and the third gap and the second gap are disposed side by side; and a flow direction of the internal air in the second gap and a flow direction of the internal air in the third gap are identical or opposite to each other.

18. The projection device of claim 17, wherein the internal air sequentially flows through the second air outlet, a second air duct, a third air duct, a first air duct, and the second air inlet in an internal circulation; and
the second air duct comprises the second gap; the third air duct comprises the third gap; at least a part of the first heat sink forms a side wall of the first air duct.

19. The projection device of claim 18, wherein the first heat sink comprises second heat dissipation fins extending into the first air duct.

20. The projection device of claim 18, further comprising a second mirror and a second lens; wherein the second mirror is configured to reflect the light emitted from the light emitting element into the second lens; the second lens is configured to collimate light; and
the second fan is on a side of the second mirror away from the light source component; and the second fan and the first heat sink comprise a third gap therebetween, and the first air duct comprises the third gap.

21. The projection device of claim 1, wherein the first fan is an axial flow fan.

22. The projection device of claim 14, further comprising a fixing frame, wherein the display panel and the first lens are inlaid on two opposite sides of the fixing frame, respectively; the first lens and the display panel comprises a third gap therebetween; and
the fixing frame comprises two through sides opposite to each other, and each through side comprises hollowed-out portions.

23. The projection device of claim 22, wherein the fixing frame comprises two positioning sides opposite to each other; and
two ends of each positioning side are connected to the two through sides, respectively; each positioning side comprises a positioning portion for cooperating with the housing for positioning the fixing frame.

24. The projection device of claim 23, wherein each positioning portion comprises a rib, and the rib extends in a same direction as the display panel;
the fixing frame further comprises a U-shaped clip; the display panel, the fixing frame, and the first lens are all between both ends of the U-shaped clip, and the U-shaped clip clamps at least one side of the fixing frame; and
the projection device further comprises a matching rib at a position where the U-shaped clip clamps the side of the fixing frame; the matching rib and the rib of the positioning portion are disposed continuously.

25. The projection device of claim 24, wherein an inner surface of the housing comprises a groove, and the rib cooperates with the groove for positioning the fixing frame; and
one of the two through sides is arranged to face the first heat sink.

26. The projection device of claim 1, comprising a focusing component for adjusting a focus of the projection lens;
wherein the focusing component comprises a sensing component and a driving component; the sensing component is configured to measure a projection distance between the projection lens and a projected image; the driving component is configured to drive the projection lens to adjust the focus according to the measured projection distance;
the driving component comprises a driving motor, an actuator, and a focus adjuster on the projection lens; the driving motor drives the actuator to move, and the actuator is coupled to the focus adjuster.

27. The projection device of claim 26, wherein the actuator comprises a first gear, and the focus adjuster comprises a transmission gear at an outer circumference of the projection lens, and the first gear and the transmission gear are engaged with each other and coupled with each other;
the focusing component comprises a limiting component for controlling a focusing range for the projection lens;
the limiting component comprises an optical coupler and a baffle plate, and a relative position between the baffle plate and the focus adjuster is fixed; and
a relative position between the optical coupler and the housing is fixed; the optical coupler is configured to determine whether light is shielded or not by the baffle plate and to send a signal for providing a command to the driving motor.

28. The projection device of claim 27, wherein the focusing component comprises a focusing ring, and the baffle plate and the transmission gear are secured around the focusing ring.

29. The projection device of claim 1, further comprising a second fan in the accommodating space and configured to promote internal air in the accommodating space to circulate so that the internal air exchanges heat through the first heat sink;
the second fan comprises a second air inlet and a second air outlet, the second air outlet is configured to discharge the internal air, and the second air inlet is configured to suck the internal air, so that the internal air circularly flows in the accommodating space; and
wherein the second fan is a centrifugal fan; the second air inlet is opposite to the first heat sink.
